# EUROPEAN PATENT SPECIFICATION

(11) **EP 1 243 088 B1**
(45) Date of publication and mention of the grant of the patent: **17.05.2006**
(21) Application number: 00991432.6
(22) Date of filing: 22.12.2000
(51) Int. Cl.: H04B 7/185, H04L 9/08

(54) **METHOD, APPARATUS AND SYSTEM FOR PROVIDING ENCRYPTION KEYS IN A SATELLITE COMMUNICATIONS NETWORK**
VERFAHREN, VORRICHTUNG UND SYSTEM ZUR BEREITSTELLUNG VON VERSCHLÜSSELUNGSSCHLÜSSELN IN EINEM SATELLITENKOMMUNIKATIONSNETZWERK
PROCEDE, APPAREIL ET SYSTEME DE CHIFFREMENT DE CLES DANS UN RESEAU DE TELECOMMUNICATIONS PAR SATELLITES

(30) Priority: 29.12.1999 US 474919
(43) Date of publication of application: 25.09.2002
(73) Proprietor: TELEFONAKTIEBOLAGET LM ERICSSON (publ), 164 83 Stockholm (SE)
(72) Inventor: BALACHANDRAN, Shridharan, CA-94536 Fremont (CA); ALPEROVICH, Vladimir, Dallas, TX 75252 (US); SANNERO, Johan, Parker, TX 75002 (US); DAVIDSON, Lee, McKinney, TX 75070 (US); PETERSSON, Stefan, Frisco, TX 75035 (US); REICHELT, Martin, Plano, TX 75025 (US); SHAKIL, Nauman, Plano, TX 75075 (US)
(74) Representative: Tonscheidt, Andreas
(86) International application number: PCT/US2000/035041
(87) International publication number: WO 2001/048948

(56) References cited:
- EP-A- 0 851 628
- US-A- 5 218 638

## Description

### TECHNICAL FIELD OF THE INVENTION

The present invention relates generally to telecommunications and more particularly to a method, apparatus and system for providing encryption keys in a satellite communications network.

### BACKGROCND

Without limiting the scope of the present invention, this background of the present invention is described in connection with an asynchronous transfer mode ("ATM") network and more specifically with a Global System for Mobile communication ("GSM") satellite network.

Calls transmitted via satellite between terminals are normally sent "in the clear" unless steps are taken to encrypt the call messages. But, some satellites and their associated terminals are typically incapable of generating, managing and distributing their own encryption keys in order to lower cost and complexity. As a result, there is a need to perform encryption key management for the satellite and its associated terminals. For example, European patent application EP 0 851 628 A1, published 1 July 1998, describes a satellite mobile communications system that allows terminals communicate with one another using end-to-end encryption and decryption techniques. In this system, the encryption keys are generated at a remote database station and then transmitted separately to each terminal. Another encryption system is described in U.S. patent number 5,219,638, issued 8 June 1993. The '638 patent describes an encryption and decryption system that allows an encrypted broadcast to be decrypted only by specified users. If the destination confirms that it has a right to view the broadcast, it will correctly generate the broadcast decryption key. If not, the destination will not decrypt the broadcast.

A satellite communications network can cover all or part of several countries. Accordingly, any encryption algorithm that is used to generate the encryption keys needs to conform to the local rules of the country. Some countries, such as France, do not allow encryption of data in their spectrum. Still other countries, such as the USA, do not allow encryption technology to be sent to unfavorable countries like Libya or Iraq. And other countries limit the encryption algorithm technology that can be used. Thus, a satellite communications network should conform to the different encryption rules and regulations of the various countries. This problem is compounded when the end points or terminals can be mobile. There is, therefore, a need to determine the optimum type of encryption to be used for each call path in a satellite call session. This information is available only satellite call control center.

Once a call path is established, the encryption mechanism used remains the same throughout the session connection. A different encryption key will typically be used when a different session is started. This avoids the extended use of an encryption key, which would negate or reduce the effectiveness of the encryption used to protect the session. But some of the terminals within the satellite communication network may be a commercial establishment that maintains a nearly continuous session with another terminal to provide access to their branch local area network ("LAN"). For example, the session might be packet flow between a branch office and the corporate LAN that can be accessed by many LAN personal computers simultaneously and continuously. The satellite connection or session will always be active if there are several interleaved up-link and down-link sessions between terminals on either side of this communication link. Thus the connection between terminals could remain active for days, weeks or even months. In addition, satellite systems typically cannot afford to use very large encryption key sizes, such .as 128 bit or larger, because the larger encryption key sizes are processing intensive. Smaller encryption keys, on the other hand, can be broken given enough time using just ordinary PC's. There is, therefore, a need to increase the security of these extended length sessions and compensate for the use of smaller encryption keys.

What is needed is a method, apparatus and system for providing encryption keys in such a satellite communications network.

### SUMMARY OF THE INVENTION

The present invention provides a method, apparatus and computer program for providing one or more encryption keys to a source terminal and one or more end terminals for a future possible communication between the source terminal and the one or more end terminals. The source terminal sends a first message to a network device. The network device determines one or more encryption capabilities in terms of algorithmic support and one or more domain specific encryption restrictions for the source terminal and each end terminal and generates the one or more encryption keys based on the one or more encryption capabilities and the one or more restrictions for the source terminal and each end terminal. The network device then sends a second message containing the one of more encryption keys to the source terminal. The source terminal or the network device sends a third message containing the one or more encryption keys to each end terminal.

The present invention allows a non-key generation capable terminal to send and receive encrypted calls. Furthermore, the present invention provides a centralized management infrastructure that supports the whole satellite region with less expense and more secure encryption keys. The present invention can also be merged with any transport mechanism (like ATM/FR/IP) in the satellite.

In addition, the present invention increases the security of extended length sessions and compensates for the use of smaller encryption keys by periodically changing the encryption keys. The period of time may be determined randomly to reduce the risk of the encryption key being cracked, or by the quality of service for the call, or the type of call, or based on SLA, or potential for fraud in the region, or some other factor. The process to change the encryption key may be initiated by a terminal, network control center, or an operator.

The present invention also allows the bearer paths between terminals to be separately encrypted using different algorithms or no encryption. As a result, the present invention can provide the greatest security allowed by law and the limitations of the terminals.

### BRIEF DESCRIPTION OF THE DRAWINGS

Figure 1 depicts a block diagram illustrative of a satellite telecommunications network in accordance with one embodiment of the present invention;
Figure 2 depicts a signaling sequence illustrative of a satellite telecommunications network in accordance with the network shown in Figure 1;
Figure 3 depicts another signaling sequence illustrative of a satellite telecommunications network in accordance with the network shown in Figure 1;
Figure 4 depicts another signaling sequence illustrative of a satellite telecommunications network in accordance with the network shown in Figure 1;
Figure 5 depicts another signaling sequence illustrative of a satellite telecommunications network in accordance with the network shown in Figure 1;
Figure 6 depicts a block diagram illustrative of a satellite telecommunications network in accordance with another embodiment of the present invention;
Figure 7 depicts a signaling sequence illustrative of a satellite telecommunications network in accordance with the network shown in Figure 6;
Figure 8 depicts a block diagram illustrative of a satellite telecommunications network in accordance with another embodiment of the present invention; and
Figure 9 depicts a signaling sequence illustrative of a satellite telecommunications network in accordance with the network shown in Figure 8.

### DETAILED DESCRIPTION OF THE PREFERRED EMBODIMENT

The present invention provides a method, apparatus and system for generating, distributing and coordinating encryption keys in wide-band satellite communication networks, such as Astrolink, Teledesic, Horizon or Globalstar 2. These encryption keys can be used in data plus voice communications in point-to-point and point-to-multipoint calls.

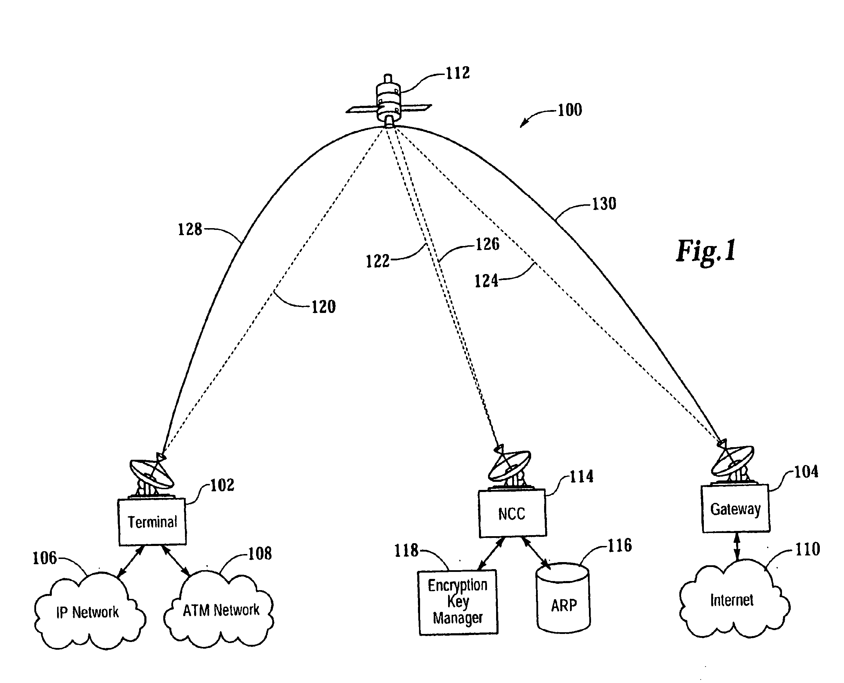

Figure 1 is a block diagram illustrating a satellite telecommunications network 100 in accordance with one embodiment of the present invention. The satellite telecommunications network 100 includes gateway earth 104 stations and terminals 102 that connect to other terrestrial networks, such as an IP network 106 or an ATM network 108, or the Internet 110. Terminals 102 and 104 communicate via satellite 112, which is controlled by a network control center ("NCC") 114 that performs the necessary routing of calls and services. An address resolution protocol ("ARP") server 116 and an encryption key manager 118 are communicably connected to the NCC 114. The ARP server 116 and encryption key manager 118 may be located either locally or remotely.

Each satellite 112 covers a geographic area and has an on-board Asynchronous Transfer Mode ("ATM") type or other wide area network (WAN) layer switch fabric. Although the satellite 112 does not typically have any control or signaling functions, the satellite 112 is responsible for connecting terminals 102 to the gateways 104 and vice versa. Thus, the satellite 112 is controlled from a NCC 114 on the ground where all the signaling and control information is handled. Note the present invention is still applicable to satellites that do have control and signaling functions.

The ARP server 116 contains a database that translates unrecognized or network layer addresses into corresponding satellite terminal MAC (layer 2) addresses. The translation capability of the ARP server 116 is not limited to the translation of Internet Protocol ("IP") addresses to integrated services digital network or E.164 addresses, but can be used to translate an unrecognized or network address into any layer 2 address if the necessary information is stored in the database.

Calls transmitted between terminal 102 and gateway 104 are via satellite 112 are normally sent "in the clear" unless steps are taken to encrypt the call messages. Encryption of the call messages is, therefore, an optional function and is not mandatory for all connections. In some satellite networks, the terminals 102 and gateways 104 are typically incapable of generating, managing and distributing their own encryption keys. As a result, the NCC 114 has to perform the encryption key management using an encryption key manager 118. The encryption key manager 118 generates encryption keys for use by the terminals 102 and 104 to encrypt messages transmitted over all legs of the bearer connection, such as bearer links 128 and 130. The encryption key manager 118 is typically operated and maintained within strict security framework.

Figure 1 also depicts various signaling links (shown as dashed lines) between the NCC 114 and the terminals 102 and 104. Bearer links (shown as solid lines) are also shown between terminal 102 and gateway 104. For example, two signaling circuits are required to set up a call between terminal 102 and gateway 104: signaling links 120 and 122 between terminal 102 and the NCC 114 via satellite 112; and signaling links 124 and 126 between gateway 104 and the NCC 114 via satellite 112. The two signaling circuits comprising signaling links 120, 122, 124 and 126 are encrypted. Typically there is no correlation between the encryption keys used for the bearer link 128-130 and the encryption keys used for the signaling links 120-122 and 124-126. Likewise, there is typically no correlation between the encryption keys used for signaling links 120 and 122, and signaling links 124 and 126. If the call connection process is completed correctly, two bearer links are established to complete the connection: bearer link 128 between terminal 102 and the satellite 112; and bearer link 130 between the satellite 112 and gateway 104.

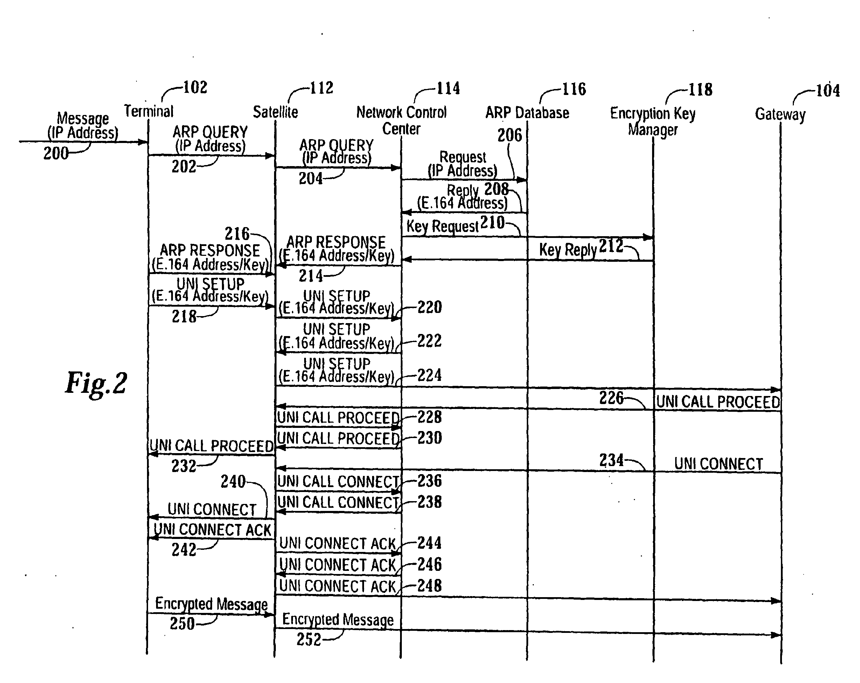

Referring now to Figure 2, a signaling sequence illustrative of a satellite telecommunications network in accordance with a preferred embodiment of the present invention is shown. This example is based on the receipt of an IP addressed message in the satellite terminal that supports ARP, UNI call setup protocols, and E.164 addresses. As previously described, the present invention is not limited to receiving IP addressed messages or translating them into E.164 addressed messages, but can be adapted to apply to any layer 3 addressing system.

The process begins when terminal 102 receives a message 200 having an IP destination address. Terminal 102 sends an ARP QUERY message 202-204 containing the IP destination address to the NCC 114 via satellite 112. The NCC 114 sends a translation request 206 containing the IP destination address to the ARP server 116. If the ARP server 116 properly translates the IP destination address into an E.164 network address, it sends a translation reply 208 containing the corresponding E.164 address to the NCC 114. In addition, the NCC 114 sends a key request 210 to the encryption key manager 118. The encryption key manager 118 generates an encryption key to be used by terminal 102 and gateway 104 to encrypt the messages that will be sent during this call and sends the encryption key to the NCC 114 in a key reply 212. Since terminal 102 and gateway 104 may not have the same encryption capabilities, the encryption key manager 118 will use a mutually acceptable encryption algorithm to generate the encryption key, where possible.

The NCC 114 sends an ARP RESPONSE 214-216 containing the E.164 destination address and the encryption key to the terminal 102 via satellite 112. Note that the signaling link is already secured by GSM/GPRS encryption mechanisms so carrying the bearer encryption key in the signaling message is safe. The terminal 102 inserts the E.164 destination address as the called party number and includes the encryption key as a user defined parameter in a UNI SETUP message 218 and sends the UNI SETUP message 218-220 to the NCC 114 via satellite 112. Again, this signaling message uses the previously established GSM/GPRS encrypted signaling circuit. The NCC 114 sends UNI SETUP message 222-224 containing the E.164 destination address and the encryption key to the gateway 104 via satellite 112.

Gateway 104 responds by sending UNI CALL PROCEEDING message 226-228 to the NCC 114 via satellite 112. The NCC 114 then sends UNI CALL PROCEEDING message 230-232 to the terminal 102 via satellite 112. Gateway 104 also sends UNI CONNECT message 234-236 to the NCC 114 via satellite 112. The NCC 114 then sends UNI CONNECT message 238-240 to the terminal 102 via satellite 112. Terminal 102 responds by sending UNI CONNECT ACK message 242-244 to the NCC 114 via satellite 112. The NCC 114 then sends UNI CONNECT ACK message 246-248 to the gateway 104 via satellite 112. The call setup process is now complete and terminal 102 sends encrypted message 250-252 to the gateway 104 via satellite 112. Communication between terminal 102 and gateway 104 via the satellite 112 will continue and be encrypted until terminated.

The present invention allows a non-key generation capable node, such as terminal 102 or gateway 104, to send and receive encrypted calls. Furthermore, the present invention provides a centralized management infrastructure that supports the whole satellite region with less expense and more secure encryption keys. In addition, the present invention can be merged with any transport mechanism (like ATM/FR/IP) in the satellite 112.

The satellite network 100 can cover all or part of several countries. Accordingly, any encryption algorithm that is used to generate the encryption keys needs to conform to the local rules of the country. Some countries, such as France, do not allow encryption of data in their spectrum. Still other countries, such as the USA, do not allow certain encryption technology to be send to unfavorable countries like Libya or Iraq. And other countries only allow a subset of the encryption technology to be used. Thus, a satellite communications network 100 should conform to the divergent encryption rules and regulations of the various countries. This problem is compounded when the terminal 102 or the gateway 104 can be mobile.

There are two types of systems, one that allows the terminals 102 to move, and another that presumes terminals 102 to be semi-fixed. For example, terminals in Astrolink are semi-fixed, so traffic is not supported while moving. Astrolink also contemplates that most calls will be single hop terminal to terminal calls. The calls could start from one country and terminate in another country. As previously discussed, the satellite 112 on-board ATM type switch is not capable of handling traffic encryption. Only the terminal 102 and the gateway 104 are capable of supporting encryption. Astrolink presumes that (1) the location information of the terminal 102 or Gateway 104 can be derived form the Home Location Register/Visiting Location Register ("HLR/VLR"); (b) the terminal 102 and gateway 104 can provide their statistically provisioned location information; or (c) the terminal 102 and gateway 104 can determine their dynamic location information through the Global Positioning System ("GPS") or other terrestrial techniques and communicate to the NCC 114. In addition, the NCC 114, via encryption key manager 118, is the only entity that has knowledge about the capability of each terminal 102 and gateway 104, in terms of algorithmic support, or that can dictate the type of encryption that will be used.

Once a bearer path 128 and 130 is established, the encryption mechanism used remains the same throughout the session connection. A different encryption key will typically be used when a different session is started. This avoids the extended use of an encryption key, which would negate or reduce the effectiveness of the encryption used to protect all the session. But some of the terminals within the satellite communication network 100 may be a commercial establishment that maintains a nearly continuous session with another terminal to provide access to a local area network ("LAN"). For example, the session might be packet flow between a branch office and the corporate LAN that can be accessed by many LAN personal computers simultaneously and continuously. The satellite connection or session will always be active if there are several interleaved up-link and down-link sessions. Thus the connection between terminal 102 and gateway 104 could remain active for days, weeks or months. In addition, satellite systems typically cannot afford to use very large encryption key sizes, such as 128 bit or larger, because the larger encryption key sizes are processing intensive. Smaller encryption keys, on the other hand, can be cracked given enough time. There is, therefore, a need to increase the security of these extended length sessions and compensate for the use of smaller encryption keys.

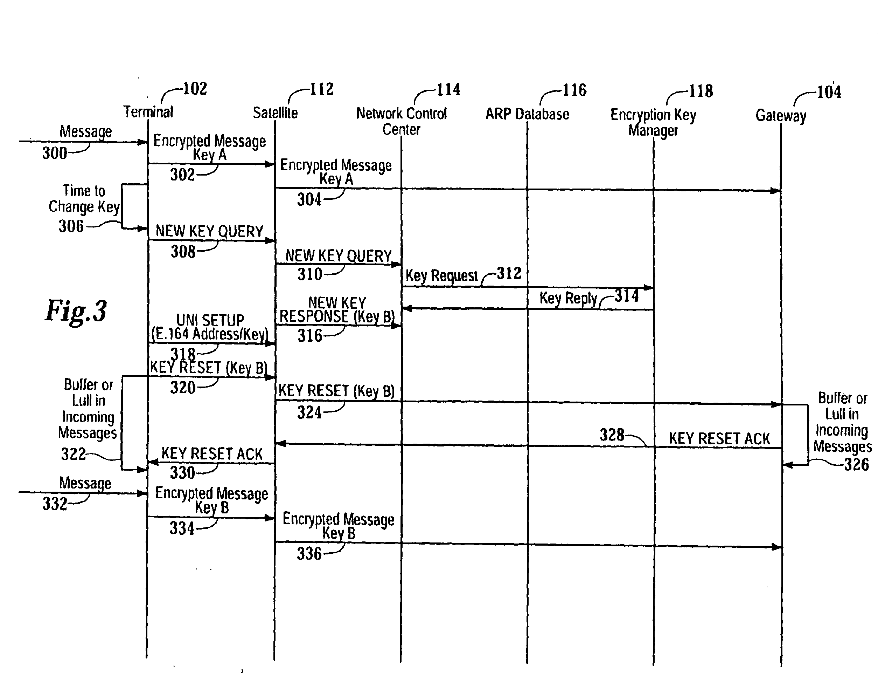

As illustrated in Figure 3, the present invention can periodically change the encryption key being used for a session. Terminal 102 receives message 300 and encrypts it using encryption key A, which was previously obtained by the process described in Figure 2. Terminal 102 sends encrypted message (key A) 302-304 to the gateway 104 via satellite 112. Since the NCC 114 is no longer involved in the call session after the call has been setup and does not know how long the session has been up and active, the periodic change in the encryption key is initiated by the terminal 102 or gateway 104. After a period of time 306 has elapsed, terminal 102 determines that it is time to change the encryption key. The period of time 306 may be determined randomly to reduce the risk of the encryption key being cracked, or by the quality of service for the call, or the type of call, or based on SLA, or potential for fraud in the region, or some other factor. The process to change the encryption key may be initiated by the terminal 102, gateway 104, NCC 114 or an operator.

Terminal 102 initiates the process of changing the encryption key by sending a NEW KEY QUERY message 308-310 to the NCC 114 via satellite 112. The NCC 114 sends a key request 312 to the encryption key manager 118. The encryption key manager 118 generates a new encryption key (key B) to be used by terminal 102 and gateway 104 to encrypt future messages between terminal 102 and gateway 104 and sends the encryption key (key B) to the NCC 114 in a key reply 314. Since terminal 102 and gateway 104 may not have the same encryption capabilities, the encryption key manager 118 will use a mutually acceptable encryption algorithm to generate the new encryption keys, where possible.

NCC 316 sends a NEW KEY RESPONSE message 316-318 containing the new encryption key B to the terminal 102 via satellite 112. Terminal 102 will then either buffer all incoming messages until the new encryption key is established or will wait until there is a lull in incoming messages 322 before establishing the new encryption key. When appropriate, terminal 102 sends KEY RESET message 320-324 containing key B to the gateway 104 via satellite 112. Terminal 102 uses a special address that identifies the KEY RESET message 324 to gateway's 104 key management software. Upon receipt of the KEY RESET message 324, gateway 104 will either buffer incoming messages or wait until there is a lull in incoming messages 326 before using the new encryption key B. The gateway 104 then sends a KEY RESET ACK message 328-330 to the terminal 102 via satellite 112. If the terminal 102 is buffering incoming messages until the new encryption keys are established, terminal 102 starts sending any messages stored in the buffer with the new encryption key B. Note that terminal 102 could alternatively exchange encryption key B with gateway 104 during a lull in communications, rather than buffering the incoming messages. When message 332 is received at the terminal 102, it is encrypted with encryption key B and sent to the gateway 104 via satellite 112 in encrypted message 334-336.

If the new encryption key B cannot be established within a specified time period, the system will automatically revert back to the old encryption key A. This ensures that non-communicating nodes in a point-to-multipoint session does not affect the entire session SLA and reduces the chance of mismatched encryption keys. The NCC 114 handles the signaling path encryption key re-allocation.

Alternatively, the new encryption keys could be used in a new message exchange between the terminal 102 and the gateway 104. In addition, the existing connection could be torn down and replaced with a new connection using the new encryption key. Once the new connection is made, the message traffic is switched to it before the old connection is torn down.

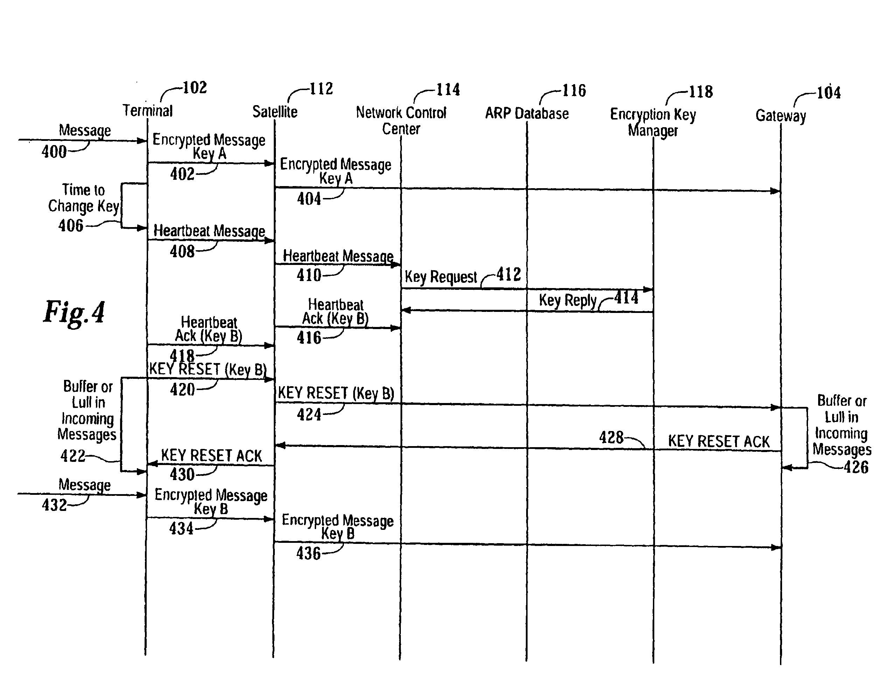

Figure 4 illustrates how the present invention can to pass new encryption keys using the heartbeat messages sent from the terminals 102 and 104 to the NCC 112. Terminal 102 receives message 400 and encrypts it using encryption key A, which was previously obtained by the process described in Figure 2. Terminal 102 sends encrypted message (key A) 402 to the satellite 112, which in turn sends encrypted message (key A) 404 to gateway 104. After a period of time 406 has elapsed, terminal 102 determines that it is time to change the encryption key. The period of time 406 may be determined randomly to reduce the risk of the encryption key being cracked, or by the quality of service for the call, or the type of call, or based on SLA, or potential for fraud in the region, or some other factor. The process to change the encryption key may be initiated by the terminal 102, gateway 104, NCC 114 or an operator.

As a result, terminal 102 sends a heartbeat message 408-410 to the NCC 114 via satellite 112. The NCC 114 sends a key request 412 to the encryption key manager 118. The encryption key manager 118 generates a new encryption key (key B) to be used by terminal 102 and gateway 104 to encrypt future messages between terminal 102 and gateway 104 and sends the encryption key (key B) to the NCC 114 in a key reply 414. Since terminal 102 and gateway 104 may not have the same encryption capabilities, the encryption key manager 118 will use a mutually acceptable encryption algorithm to generate the encryption keys, if possible.

NCC 416 sends a heartbeat acknowledgment message 416-418 containing the new encryption key B to the terminal 102 via satellite 112. Terminal 102 will then either buffer all incoming messages until the new encryption key is established or will wait until there is a lull in incoming messages 422 before establishing the new encryption key B. When appropriate, terminal 102 sends KEY RESET message 420-424 containing key B to the gateway 104 via satellite 112. Upon receipt of the KEY RESET message 424, gateway 104 will either buffer incoming messages or wait until there is a lull in incoming messages 426 before using the new encryption key. The gateway 104 then sends a KEY RESET ACK message 428-430 to the terminal 102 via satellite 112. If terminal 102 is buffering incoming messages until the new encryption keys are established, terminal 102 starts sending any messages stored in the buffer with the new encryption key B. Note that terminal 102 could alternatively exchange encryption key B with gateway 104 during a lull in communications, rather than buffering the incoming messages. When message 432 is received at the terminal 102, it is encrypted with encryption key B and sent to the gateway 104 via satellite 112 in encrypted message 434-436. The encryption key change may be implicit or explicit. An implicit key change is based on time or a sliding window basis. An explicit key change is accomplished by sending a key reset message or other equivalent message between the two end nodes.

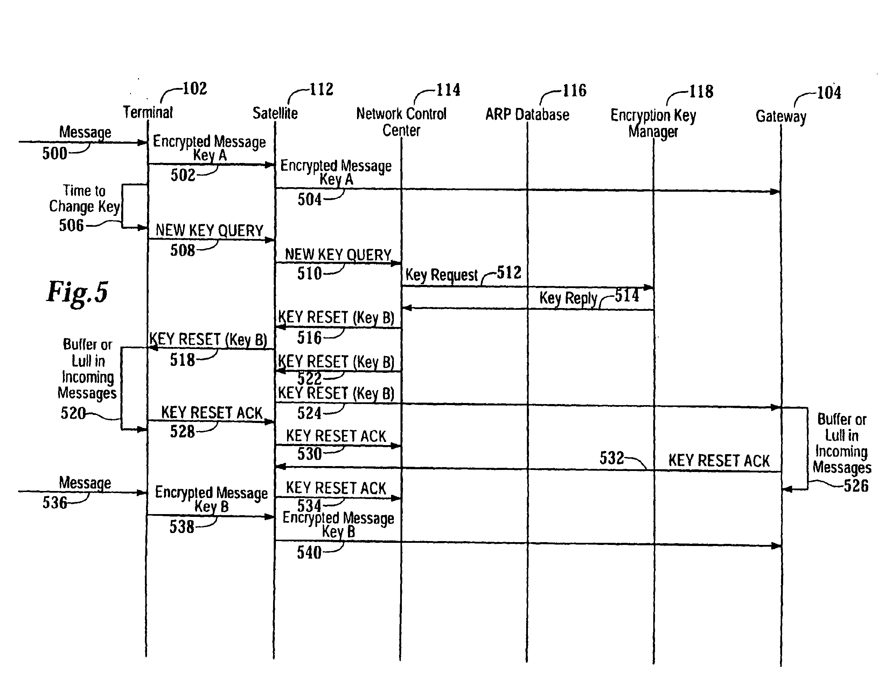

Figure 5 illustrates how the present invention can use the NCC 122 issue the new encryption keys to the various terminals 102 and 104 instead of having terminal 102 issue the new encryption keys. Terminal 102 receives message 500 and encrypts it using encryption key A, which was previously obtained by the process described in Figure 2. Terminal 102 sends encrypted message (key A) 502-504 to the gateway 104 via satellite 112. After a period of time 506 has elapsed, terminal 102 determines that it is time to change the encryption key. The period of time 506 may be determined randomly to reduce the risk of the encryption key being cracked, or by the quality of service for the call, or the type of call, or based on SLA, or potential for fraud in the region, or some other factor. The process to change the encryption key may be initiated by the terminal 102, gateway 104, NCC 114 or an operator.

Terminal 102 initiates the process of changing the encryption key by sending a NEW KEY QUERY message 508-510 to the NCC 114 via satellite 112. The NCC 114 sends a key request 512 to the encryption key manager 118. The encryption key manager 118 generates a new encryption key (key B) to be used by terminal 102 and gateway 104 to encrypt future messages between terminal 102 and gateway 104 and sends the encryption key (key B) to the NCC 114 in a key reply 514. Since terminal 102 and gateway 104 may not have the same encryption capabilities, the encryption key manager 118 uses a mutually acceptable encryption algorithm to generate the encryption keys, if possible.

NCC 114 sends a KEY RESET message 516-518 containing the new encryption key B to the terminal 102 via satellite 112. Terminal 102 will then either buffer all incoming messages until the new encryption key is established or will wait until there is a lull in incoming messages 522 before establishing the new encryption key. In addition, NCC 114 sends KEY RESET message 522-524 containing key B to the gateway 104 via satellite 112. Upon receipt of the KEY RESET message 524, gateway 104 will either buffer incoming messages or wait until there is a lull in incoming messages 526 before using the new encryption key. The terminal 102 then sends a KEY RESET ACK message 528-530 to the NCC 114 via satellite 112. The gateway 104 also sends a KEY RESET ACK message 532-534 to the NCC 114 via satellite 112. If terminal 102 is buffering incoming messages until the new encryption keys were established, terminal 102 starts sending any messages stored in the buffer with the new encryption key B. Note that terminal 102 could alternatively exchange encryption key B with gateway 104 during a lull in communications, rather than buffering the incoming messages. When message 536 is received at the terminal 102, it is encrypted with encryption key B and sent to the gateway 104 via satellite 112 in encrypted message 538-540. The NCC 114 will also communication the encryption key B to any other participants in the bearer connection.

Alternatively, the present invention can change the encryption keys whenever a location update procedure is performed or when the GPS determines that the terminal 102 or gateway 104 has crossed a logical boundary. Moreover, the NCC 114 could include a group of encryption keys in the ARP RESPONSE message to be exchanged between terminal 102, gateway 104 and any other end points. Terminal 102, gateway 104 and any other end points would then be synchronized to periodically select a new encryption key from the group, rather than having to request a new encryption key each time the encryption key needs to be changed. Similarly, the terminal 102 and gateway 104 could periodically negotiate to change the encryption key based on an algorithm or a known set, group, or collection of encryption keys.

Moreover, the present invention can be configured such that the terminal 102 and gateway 104 do not secure encryption keys from the NCC. Instead, terminal 102 and gateway 104 have a knowledge base of the set of all random encryption keys that can be supported by the associated end node. The terminal 102 or gateway 104 can then choose the encryption key from this list and use it for encryption. The NCC 114 may only be involved in setting up the knowledge base or periodically updating the knowledge base of the end nodes in its domain. The terminal 102 and the gateway 104 could also use a specialized algorithm to transform the encryption keys to a new entity (periodically) based on a prior assigned or hard-coded algorithm. The encryption keys could also be sequenced through a certain pattern between the end nodes.

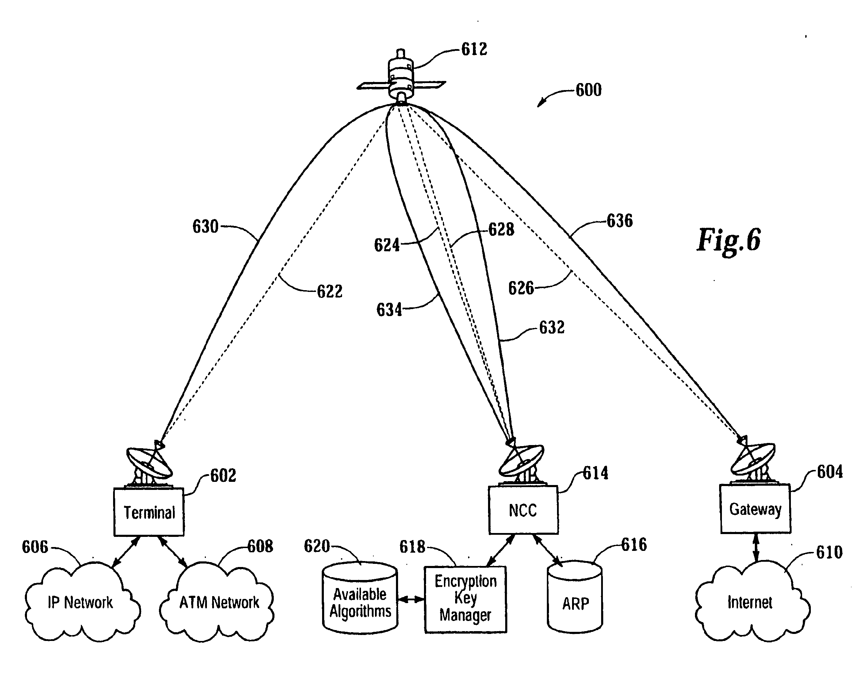

Figure 6 is a block diagram illustrating a satellite telecommunications network 600 in accordance with one embodiment of the present invention. The satellite telecommunications network 600 allows the bearer paths from terminals 602 and 604 to be separately encrypted using different algorithms or no encryption. The satellite telecommunications network 600 includes gateway earth station 602 and terminal 604 that connect to other terrestial networks, such as an IP network 606 or an ATM network 608, or the Internet 610. Terminals 602 and 604 communicate via satellite 612, which is controlled by a network control center ("NCC") 614 that performs the necessary routing of calls and services. An address resolution protocol ("ARP") server 616 and an encryption key manager 618 are communicably connected to the NCC 614. The ARP server 616 and encryption key manager 618 may be located either locally or remotely. The encryption key manager 618 has access to a database or other information service containing available algorithms 620 for use by the encryption key manager 618.

The ARP server 616 contains a database that translates unrecognized or network layer addresses into corresponding satellite terminal MAC (layer 2) addresses. The translation capability of the ARP server 616 is not limited to the translation of Internet Protocol ("IP") addresses to integrated services digital network or E.164 addresses, but can be used to translate an unrecognized or network address into any layer 2 address if the necessary information is stored in the database.

The encryption key manager 618 generates encryption keys for use by the terminals 602 and 604 to encrypt messages transmitted over bearer links 630, 632, 634 and 636. The encryption key manager 618 is typically operated and maintained within strict security framework. The available algorithms 620 contains information about what type of encryption is permitted by the countries in which the terminals 602 and 604 are located and any equipment limitations imposed by terminals 602 and 604. Moreover, the available algorithms will typically be prioritized so that the encryption key manager 618 will select the best available encryption algorithm for each specific terminal 602 and 604.

Figure 6 also depicts various signaling links (shown as dashed lines) between the NCC 614 and the terminals 602 and 604. Bearer links (shown as solid lines) are also shown between terminal 602 and gateway 604. For example, two signaling connections are required to set up a call between terminal 602 and gateway 6.04: signaling link 622-624 between terminal 602 and the NCC 614 via satellite 612; and signaling link 626-628 between gateway 604 and the NCC 614 via satellite 612. If the call connection process is completed correctly, two bearer connections are established to complete the two-hop connection: bearer link 630-632 between terminal 602 and the NCC 614 via satellite 612; and bearer link 634-636 between NCC 614 and the gateway 604 via satellite 612. A region specific encryption method is used on each hop connection. When no common algorithm match is found between the two regions, the call can be established as a two-hop connection as illustrated, instead of a single hop connection. When the satellite has sufficient processing capabilities, the satellite 612 can run one algorithm for bearer link 630-632 to terminal 602 and another algorithm for bearer link 634-636 to gateway 604.

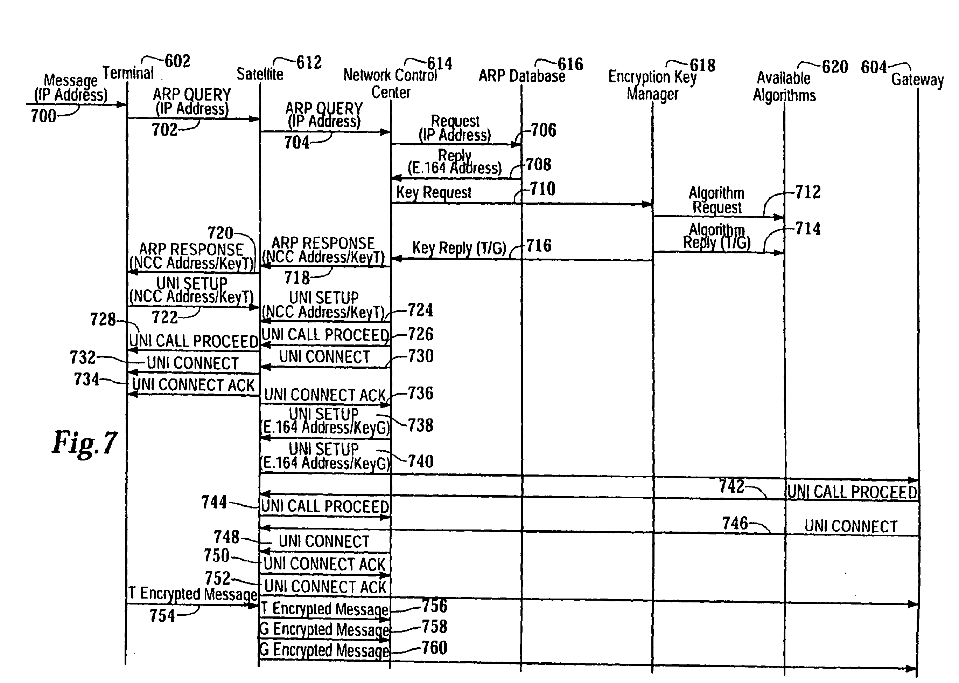

Referring now to Figure 7, a signaling sequence illustrative of a satellite telecommunications network in accordance with a preferred embodiment of the present invention is shown. This example is based on the receipt of an IP addressed message in the satellite terminal that supports ARP, UNI call setup protocols, and E.164 addresses. As previously described, the present invention is not limited to receiving IP addressed messages or translating them into E.164 addressed messages, but can be adapted to apply to any layer 3 addressing system.

The process begins when terminal 602 receives a message 700 having an IP destination address. Terminal 602 sends an ARP QUERY message 702-704 containing the IP destination address to the NCC 614 via satellite 612. The NCC 614 sends a translation request 706 containing the IP destination address to the ARP server 616. If the ARP server 616 properly translates the IP destination address into an E.164 network address, it sends a translation reply 708 containing the corresponding E.164 address to the NCC 614. In addition, the NCC 614 sends a key request 710 to the encryption key manager 618. The encryption key manager 618 queries the database or information service with an algorithm request 712. The available algorithms 618 for the terminal 602 and gateway 604 will be determined according to the type of encryption permitted by the country in which the terminal 602 and gateway 604 reside and the encryption capabilities of terminals 602 and 604. Other factors may also be used to determine the best type of encryption, if any, to be used by the terminal 602 and gateway 604. If no common legal subset of algorithms is available, the NCC 114 will chose a default algorithm for the terminals 602 and/or 604. Thus, the present invention provides the greatest security allowed by law and the limitations of the terminals. For example, bearer link 630-632 might be highly encrypted, while bearer link 634-636 might not be encrypted at all. The available algorithms database 620 returns an algorithm reply 714 to the encryption key manager 618 containing the algorithm types that can be used for the terminal 602 and the gateway 604. The encryption key manager 618 uses the information provided by the available algorithms 620 to generate an encryption key T for terminal 602 and an encryption key G for the gateway 604 and then sends the encryption keys T and G to the NCC 614 in a key reply 716.

The NCC 614 sends an ARP RESPONSE 718-720 containing the E.164 destination address of the NCC 614 and the encryption key T to the terminal 602 via satellite 612. The terminal 602 inserts the E.164 destination address of the NCC 614 as the called party number and includes the encryption key T as a user defined parameter in a UNI SETUP message 722-724 and sends the UNI SETUP message 722-724 to the NCC 614 via satellite 612.

NCC 614 responds by sending UNI CALL PROCEEDING message 726-728 to the terminal 602 via satellite 612. NCC 614 also sends UNI CONNECT message 730-732 to the terminal 602 via satellite 612. Terminal 602 responds by sending UNI CONNECT ACK message 734-736 to the NCC 614 via satellite 612. The call setup process for the first hop between terminal 602 and NCC 614 is now complete.

In addition, the NCC 614 inserts the E.164 destination address as the called party number and includes the encryption key G as a user defined parameter in a UNI SETUP message 738-740 and sends the UNI SETUP message 738 to the gateway 604 via satellite 612. The gateway 604 responds by sending UNI CALL PROCEEDING message 742-744 to the NCC 614 via satellite 612. Gateway 604 also sends UNI CONNECT message 746-748 to the NCC 614 via satellite 612. NCC 614 responds by sending UNI CONNECT ACK message 750-752 to the gateway 604 via satellite 612. The call setup process for the second hop between the NCC 614 and the gateway 604 is now complete. Terminal 602 then sends T encrypted message 754-756 to the NCC 614 via satellite 612. NCC 614 then sends G encrypted message 758-760 to the gateway 604 via satellite 612. Communication between terminal 602 and gateway 604 via the satellite 612 and NCC 614 will continue and be encrypted using the two different encryption keys until terminated. As previously described one of the hops may not be encrypted or they both may be encrypted using the same type of encryption algorithm.

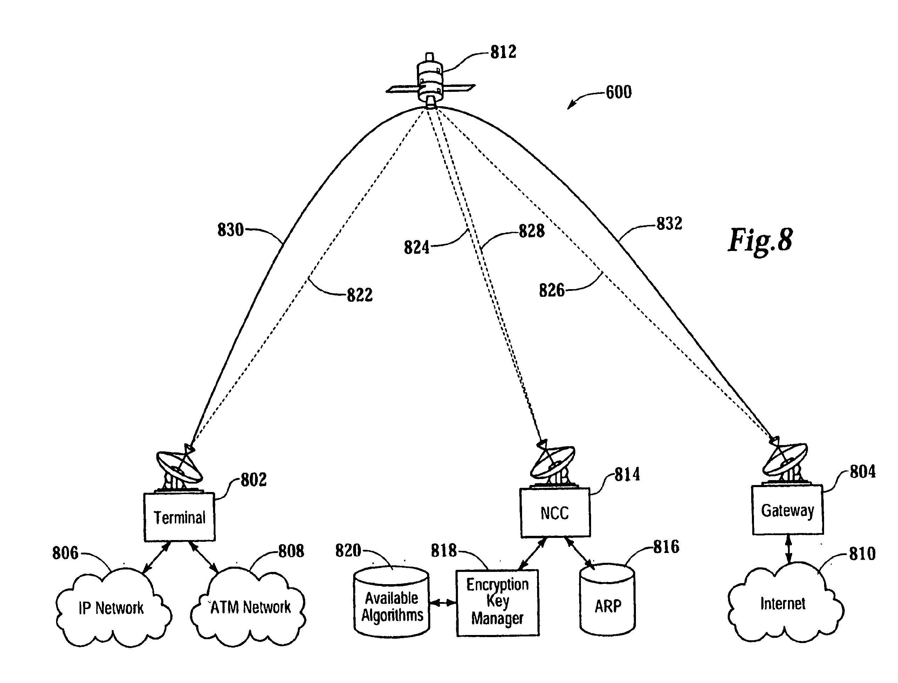

Figure 8 is a block diagram illustrating a satellite telecommunications network 800 in accordance with one embodiment of the present invention. The satellite telecommunications network 800 allows the bearer paths from terminals 802 and 804 to be separately encrypted using different algorithms or no encryption. The satellite telecommunications network 800 includes gateway earth station 802 and terminal 804 that connect to other terrestrial networks, such as an IP network 806 or an ATM network 808, or the Internet 810. Terminals 802 and 804 communicate with a satellite 812, which is controlled by a network control center ("NCC") 814 that performs the necessary routing of calls and services. In this embodiment, satellite 812 is capable of encrypting and decrypting messages. An address resolution protocol ("ARP") server 816 and an encryption key manager 818 are communicably connected to the NCC 814. The ARP server 816 and encryption key manager 818 may be located either locally or remotely. The encryption key manager 818 has access to a database or other information service containing available algorithms 820 for use by the encryption key manager 818.

The ARP server 816 contains a database that translates unrecognized or network layer addresses into corresponding satellite terminal MAC (layer 2) addresses. The translation capability of the ARP server 816 is not limited to the translation of Internet Protocol ("IP") addresses to integrated services digital network or E.164 addresses, but can be used to translate an unrecognized or network address into any layer 2 address if the necessary information is stored in the database.

The encryption key manager 818 generates encryption keys for use by the terminals 802 and 804 to encrypt messages transmitted over bearer links 830 and 832. The encryption key manager 818 is typically operated and maintained within strict security framework. The available algorithms 820 contains information about what type of encryption is permitted by the countries in which the terminals 802 and 804 are located and any equipment limitations imposed by terminals 802 and 804. Moreover, the available algorithms will typically be prioritized so that the encryption key manager 818 will select the best available encryption algorithm for each specific terminal 802 and 804.

Figure 8 also depicts various signaling links (shown as dashed lines) between the NCC 814 and the terminals 802 and 804. Bearer links (shown as solid lines) are also shown between terminal 802 and gateway 804. For example, two signaling connections are required to set up a call between terminal 802 and gateway 804: signaling link 822-824 between terminal 802 and the NCC 814 via satellite 812; and signaling link 826-828 between gateway 804 and the NCC 814 via satellite 812. If the call connection process is completed correctly, two separate bearer links are established to complete the one-hop split connection: bearer link 830 between terminal 802 and the satellite 812; and bearer link 832 between the satellite 812 and gateway 804.

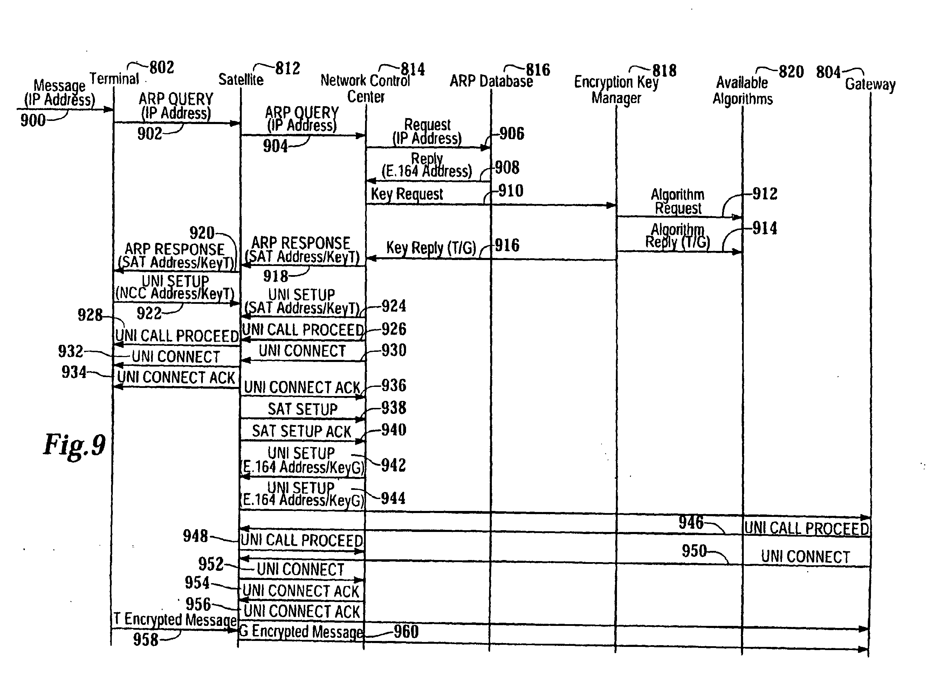

Referring now to Figure 9, a signaling sequence illustrative of a satellite telecommunications network in accordance with a preferred embodiment of the present invention is shown. This example is based on the receipt of an IP addressed message in the satellite terminal that supports ARP, UNI call setup protocols, and E.164 addresses. As previously described, the present invention is not limited to receiving IP addressed messages or translating them into E.164 addressed messages, but can be adapted to apply to any layer 3 addressing system.

The process begins when terminal 802 receives a message 900 having an IP destination address. Terminal 802 sends an ARP QUERY message 902-904 containing the IP destination address to the NCC 814 via satellite 812. The NCC 814 sends a translation request 906 containing the IP destination address to the ARP server 816. If the ARP server 816 properly translates the IP destination address into an E.164 network address, it sends a translation reply 908 containing the corresponding E.164 address to the NCC 814. In addition, the NCC 814 sends a key request 910 to the encryption key manager 818. The encryption key manager 818 queries the database or information service with an algorithm request 912. The available algorithms 818 for the terminal 802 and gateway 804 will be determined according to the type of encryption permitted by the country in which the terminal 802 and gateway 804 reside and the encryption capabilities of terminals 802 and 804. Other factors may also be used to determine the best type of encryption, if any, to be used by the terminal 802 and gateway 804. Thus, the present invention provides the greatest security allowed by law and the limitations of the terminals. For example, bearer link 830 might be highly encrypted, while bearer link 832 might not be encrypted at all. The available algorithms database 820 returns an algorithm reply 914 to the encryption key manager 818 containing the algorithm types that can be used for the terminal 802 and the gateway 804. The encryption key manager 818 uses the information provided by the available algorithms 820 to generate an encryption key T for terminal 802 and an encryption key G for the gateway 804 and then sends the encryption keys T and G to the NCC 814 in a key reply 916.

The NCC 814 sends an ARP RESPONSE 918-920 containing the E.164 destination address of the satellite 812 and the encryption key T to the terminal 802 via satellite 812. The terminal 802 inserts the E.164 destination address of the satellite 812 as the called party number and includes the encryption key T as a user defined parameter in a UNI SETUP message 922-924 and sends the UNI SETUP message 922 to the NCC 814 via satellite 812.

NCC 814 responds by sending UNI CALL PROCEEDING message 926-928 to the terminal 802 via satellite 812. NCC 814 also sends UNI CONNECT message 930-932 to the terminal 802 via satellite 812. Terminal 802 responds by sending UNI CONNECT ACK message 934-936 to the NCC 814 via satellite 812. The call setup process for the first call segment between terminal 802 and the satellite 812 is now complete. The NCC 814 sends a SATELLITE SETUP message 938 to the satellite 812 to enable the two segment call configuration. The satellite 812 sends a SATELLITE SETUP ACK message 940 to the NCC 814.

In addition, the NCC 814 inserts the E.164 destination address as the called party number and includes the encryption key G as a user defined parameter in a UNI SETUP message 942-946 and sends the UNI SETUP message 942-946 to the gateway 804 via satellite 812. The gateway 804 responds by sending UNI CALL PROCEEDING message 946-948 to the NCC 814 via satellite 812. Gateway 804 also sends UNI CONNECT message 950-952 to the NCC 814 via satellite 812. NCC 814 responds by sending UNI CONNECT ACK message 954-956 to the gateway 804 via satellite 812. The call setup process for the second call segment between the satellite 812 and the gateway 804 is now complete. Terminal 802 then sends T encrypted message 958 to the satellite 812, which in turn sends G encrypted message 960 to the gateway 804. Communication between terminal 802 and gateway 804 via the satellite 812 will continue and be encrypted using the two different encryption keys until terminated. As previously described one of the hops may not be encrypted or they both may be encrypted using the same type of encryption algorithm.

When the satellite 812 on-board switch supports encryption, the ground segment NCC 814 can update the satellite 812 switch and request that the bearer path between terminal 802 and gateway 104 is not set transparently through the satellite 812, but is made up of two separate interconnected legs. The satellite 812 switch can then determine each leg, decrypt the traffic and apply the appropriate encryption logic as suggested by the NCC 814 to the satellite 812 switch, and forward it to the other leg of traffic. If the terminal 802 or the gateway 804 moves from one domain to another domain having different encryption rules, the NCC 814 can change the encryption keys in the mid-session at the satellite.

Based on the encryption capabilities of the terminal 802 or the gateway 814, the NCC 814 could inform the originating node to change its encryption logic. The originating node would then take responsibility to coordinate and update the peer session ends with a new key and algorithm. Alternatively, the NCC 814 could suggest the new range of the encryption techniques a session could use based on the terminal's movement and session end nodes. Then the terminal and its associated session gateway peer can negotiate and change the encryption keys to a common technique approved by all the associated peers. Since encryption affects performance, the encryption algorithm selection could be based on agreed SLA or based on the relevant radio condition at the other end nodes. In a point-to-multipoint connection, the NCC 814 could negotiate a common encryption algorithm for all ends nodes or select "no encryption" as the mechanism to transport traffic.

## Claims

1. A method of providing one or more encryption keys to a source terminal 102, 602, 802) and one or more end terminals (104, 604, 804) for a future possible communication between the source terminal (102, 602, 802) and the one or more end terminals (104, 604, 804) after a first message (202-204, 702-704, 902-904) is received at a network device (114, 614, 814), the method comprising the steps of :
determining one or more encryption capabilities in terms of algorithmic support and one or more domain specific encryption restrictions for the source terminal (102, 602, 802) and each end terminal (104, 604, 804);
generating the one or more encryption keys based on the one or more encryption capabilities and the one or more restrictions for the source terminal (102, 602, 802) and each end terminal (104, 604, 804);
sending a second message (214-216, 718-720, 918-920) containing the one or more encryption keys from the network device (114, 614, 814) to the source terminal (102, 602, 802) via a satellite (112, 612, 812); and
sending a third message (218-224) containing the one or more encryption keys from the source terminal (102, 602, 802) or from the network device (114, 614, 814) to each end terminal (104, 604, 804) via the satellite (112, 612, B12).

2. The method as recited in claim 1, wherein the network device (114, 614, 814) is a network control center.

3. The method as recited in claim 1, wherein the one or more encryption keys are generated by an encryption key manager (118, 618, 818) coupled to the network device (114, 614, 814).

4. The method as recited in claim 1, wherein the satellite (112, 612, 812) has an on-board switch that supports encryption.

5. The method as recited in claim 1, wherein the first message (202-204, 702-709, 902-904) comprises an ARP query message.

6. The method as recited in claim 1, wherein the first message (202-204, 702-704, 902-904) comprises a heartbeat message.

7. The method as recited in claim 1, wherein the second message (214-216, 718-720, 918-920) comprises an ARP response message.

8. The method as recited in claim 1, wherein the second message (21 -216, 718-720, 918-920) comprises a heartbeat message.

9. The method as recited in claim 1, wherein the third message (218-224) comprises an UNI setup message.

10. The method as recited in claim 1, wherein the third message (218-224) comprises a heartbeat message.

11. The method as recited in claim 1, wherein the one or more encryption keys comprises a group of encryption, keys.

12. The method as recited in claim 11, further comprising the step of periodically selecting a new encryption key to be used from the group of encryption keys.

13. The method as recited in claim 12, wherein the new encryption key is negotiated between the source terminal (102, 602, 802) and the one or more end terminals (104, 604, 804).

14. The method as recited in claim 1, further comprising the step of establishing an encrypted bearer path (128-130, 630-636, 830-832) between the source terminal (102, 602, 802) and each end terminal (104, 604, 804) using the one or more encryption keys.

15. The method as recited in claim 14, wherein the encrypted bearer path (128-130, 630-636, 830-832) comprises a point-to-point call.

16. The method as recited in claim 14, wherein the encrypted bearer path (128-130, 630-636, 830-832) comprises a point-to-multipoint call.

17. The method as recited in claim 1, further comprising the step of instructing the source terminal (102, 602, 802) to change encryption logic based on one or more encryption capabilities or restrictions of the one or more end terminals (104, 604, 804).

18. The method as recited in claim 1, further comprising the step of determining a new range of encryption capabilities and restrictions of the source terminal (102, 602, 802) or the one or more end terminals (104, 604, 804) whenever the source terminal (102, 602, 802) or the one or more end terminals (104, 604, 804) move.

19. The method as recited in claim 1, further comprising the step of transforming the one or more encryption keys to a new entity using a specialized algorithm based on a prior assigned or hard coded algorithm.

20. The method as recited in claim 1, further comprising the step of selecting an algorithm based on an agreed SLA or relevant radio conditions at the source terminal (102, 602, 802) or the one or more end terminals (104, 604, 804).

21. The method as recited in claim 1, further comprising the step of changing the one or more encryption keys.

22. The method as recited in claim 21, wherein the one or more encryption keys are changed when a location update is performed.

23. The method as recited in claim 21, wherein the one or more encryption keys are changed when one of the end terminals (104, 604, 804) crosses a logical barrier.

24. The method as recited in claim 21, wherein the one or more encryption keys are changed based on an algorithm.

25. The method as recited in claim 21, wherein the one or more encryption keys are changed after a period of time has elapsed.

26. The method as recited in claim 25, wherein the period of time is determined randomly.

27. The method as recited in claim 25, wherein the period of time is determined by a quality of service.

28. The method as recited in claim 25, wherein the period of time is determined by a call type.

29. The method as recited in claim 25, wherein the period of time is determined by a SLA.

30. The method as recited in claim 25, wherein the period of time is determined by a potential for fraud in a geographic region.

31. The method as recited in claim 21, wherein the step of changing the one or more encryption keys is initiated by the source terminal (102, 602, 802).

32. The method as recited in claim 21, wherein the step of changing the one or more encryption keys is initiated by one of the end terminals (104, 604, 804).

33. The method as recited in claim 21, wherein the step of changing the one or more encryption keys is initiated by the network device (114, 614, 814).

34. The method as recited in claim 21, wherein the step of changing the encryption key comprises:
sending a new key request message (308-310, 408-410, 508-510) from the source terminal (102, 602, 802) to the network device (114, 614, 814) via the satellite (112, 612, 812);
generating one or more new encryption keys based on the one or more encryption capabilities and restrictions for the source terminal (102, 602, 802) and each end terminal (104, 604, 804);
sending a new key response message (316-318, 416-418, 518-520) containing the one or more new encryption keys to the source terminal (102, 602, 802) via the satellite (112, 612, 812); and
sending a key reset message (320, 329; 420, 424; 522-524) containing the one or more new encryption keys to each end terminal (104, 604, 804) via the satellite (112, 6.12, 812).

35. The method as recited in claim 34, wherein the source terminal (102, 602, 802) and the one or more end terminals (104, 604, 804) save any newly received messages until the one or more new encryption keys are accepted by the source terminal (102, 602, 802) and the one or more end terminals (104, 604, 804).

36. The method as recited in claim 34, wherein the one or more new encryption keys are accepted by the source terminal (102, 602, 802) and the one or more end terminals (104, 604, 804) during a lull in the communication.

37. The method as recited in claim 21, wherein the step of changing the encryption key comprises:
sending a new key request message (308-310, 408-410, 508-510) from the source terminal (102, 602, 802) to the network device (114, 614, 814) via the satellite (112, 612, 812); and
generating one or more new encryption keys based on the one or more encryption capabilities and restrictions for the source terminal (102, 602, 802) and each end terminal (104, 604, 809) ;
sending the one or more new encryption keys to the source terminal (102, 602, 802) and the one or more end terminals (104, 604, 804) via the satellite (112, 612, 812) .

38. The method as recited in claim 21, further comprising the step of using the changed encryption keys in a new message exchange (334-336, 434-436, 538-540) between the source terminal (102, 602, 802) and the one or more end terminals (104, 604, 804).

39. The method as recited in claim 21, further comprising the steps of:
establishing a new bearer connection between the source terminal (102, 602, 802) and the one or more end terminals (104, 604, 804) using the changed encryption keys; and
tearing down an old bearer connection, wherein the old bearer connection was established between the source terminal (102, 602, 802) and the one or more end terminals (104, 604, 804) using the one or more encryption keys.

40. The method as recited in claim 1, wherein the source terminal (102, 602, 802), the one or more end terminals (104, 604, 804) and the network device (114, 614, 814) operate within an asynchronous transfer mode network.

41. The method as recited in claim 1, further comprising the step of sending a knowledge base of a set of encryption keys that can be supported by the one or more end terminals (104, 604, 804) from the network device (114, 614, 814) to the source terminal (102, 602, 802).

42. The method as recited in claim 41, further comprising the step of periodically updating the knowledge base.

43. The method as recited in claim 1, further comprising the step of selecting a default encryption mechanism whenever the one or more encryption capabilities and restrictions are not found.

44. A computer program embodied on a computer-readable medium for providing one or more encryption keys to a source terminal (102, 602, 802) and one or more end terminals (104, 604, 804) for a future possible communication between the source terminal (102, 602, 802) and the one or more end terminals (104, 604, 804) after a first message (202-204, 702-709, 902-904) is received at a network device (114, 614, 814), the computer program comprising:
a code segment adapted to determine one or more encryption capabilities in terms of algorithmic support and one or more domain specific encryption restrictions for the source terminal (102, 602, 802) and each end terminal (104, 604, 804);
a code segment adapted to generating the one or more encryption keys based on the one or more encryption capabilities and the one or more restrictions for the source terminal (102, 602, 802) and each end terminal (104, 604, 804);
a code segment adapted to sending a second message (214-216, 718-720; 918-920) containing the one or more encryption keys from the network device (114, 614, 814) to the source terminal (102, 602, 802) via a satellite (112, 612, 812) ; and
a code segment adapted to sending a third message (218-224) containing the one or more encryption keys from the source terminal (102, 602, 802) or from the network device (114, 614, 814) to each end terminal (104, 604, 804) via the satellite (112, 612, 812).

45. The computer program as recited in claim 44, further comprising:
wherein the one or more encryption keys comprise a group of encryption keys: and
a code segment adapted to periodically selecting a new encryption key to be used from the group of encryption keys.

46. The computer program as recited in claim 44, further comprising a code segment adapted to establishing an encrypted bearer path (128-130, 630-636, 830-832) between the source terminal (102, 602, 802) and each end terminal (104, 604, 804) using the one or more encryption keys.

47. The computer program as recited in claim 44, further comprising a code segment adapted to instructing the source terminal (102, 602, 802) to change encryption logic based on one or more encryption capabilities or restrictions of the one or more end terminals (104, 604, 804).

48. The computer program as recited in claim 44, further comprising a code segment adapted to determining a new range of encryption capabilities and restrictions of the source terminal (102, 602, 802) or the one or more end terminals (104, 604, 804) whenever the source terminal (102, 602, 802) or the one or more end terminals (104, 604, 804) move.

49. The computer program as recited in claim 44, further comprising a code segment adapted to transforming the one or more encryption keys to a new entity using a specialized algorithm based on a prior assigned or hard coded algorithm.

50. The computer program as recited in claim 44, further comprising a code segment adapted to selecting an algorithm based on an agreed SLA or relevant radio conditions at the source terminal (102, 602, 802) or the one or more end terminals (104, 604, 804).

51. The computer program as recited in claim 44, further comprising a code segment adapted to changing the one or more encryption keys.

52. The computer program as recited in claim 51, wherein the code segment adapted to changing the encryption key comprises:
a code segment adapted to sending a new key request message (308-310, 408-410, 508-510) from the source terminal (102, 602, 802) to the network device (114, 614, 814) via the satellite (112, 612, 812);
a code segment adapted to generating one or more new encryption keys based on the one or more encryption capabilities and restrictions for the source terminal (102, 602, 802) and each end terminal (104, 604, 809);
a code segment adapted to sending a new key response message (316-318, 416-418, 518-520) containing the one or more new encryption keys to the source terminal (102, 602, 802) via the satellite (112, 612, 812); and
a code segment adapted to sending a key reset message (320,324; 420, 424; 522-524) containing the one or more encryption keys to each end terminal (104, 604, 804) via the satellite (112, 612, 812).

53. The computer program as recited in claim 51, wherein the code segment adapted to changing the encryption key comprises:
a code segment adapted to sending a new key request message (30B-310, 408-410, 508-510) from the source terminal (102, 602, 802) to the network device (114, 614, 814) via the satellite (112, 612, 812);
a code segment adapted to generating one or more new encryption keys based on the one or more encryption capabilities and restrictions for the source terminal (102, 602, 802) and each end terminal (104, 604, 804); and
a code segment adapted to sending the one or more new encryption keys to the source terminal (102, 602, 802) and the one or more end terminals (104, 604, 804) via the satellite (112, 612, 812).

54. The computer program as recited in claim 51, further comprising a code segment adapted to using the changed encryption keys in a new message exchange (334-336, 434-436, 538-540) between the source terminal (102, 602, 802) and one or more end terminals (104, 604, 804).

55. The computer program as recited in claim 51, further comprising:
a code segment adapted to establishing a new bearer connection between the source terminal (102, 602, 802) and the one or more end terminals (104, 604, 804) using the changed encryption keys; and
a code segment adapted to tearing down an old bearer connection, wherein the old bearer connection was established between the source terminal (102, 602, 802) and the one or more end terminals (104, 604, 804) using the one or more encryption keys.

56. The computer program as recited in claim 44, further comprising a code segment adapted to sending a knowledge base of a set of encryption keys that can be supported by the one or more end terminals (104, 604, 804) from the network device (114, 614, 814) to the source terminal (102, 602, 802).

57. The computer program as recited in claim 56, further comprising a code segment adapted to periodically updating the knowledge base.

58. The computer program as recited in claim 44, further comprising a code segment adapted to selecting a default encryption mechanism whenever the one or more encryption capabilities and restrictions are not found.

59. Network device (114, 614, 814), for providing one or more encryption keys to a source terminal (102, 602, 802) and one or more end terminals (104, 604, 804) for a future possible communication between the source terminal (102, 602, 802) and the one or more end terminals (104, 604, 804), comprising means for receiving a first message (202-204, 702-704, 902-904),
**characterized by**
means for determining one or more encryption capabilities in terms of algorithmic support and one or more domain specific encryption restrictions for the source terminal (102, 602, 802) and each end terminal (104, 604, 804);
means for generating the one or more encryption keys based on the one or more encryption capabilities and the one or more restrictions for the source terminal (102, 602, 802) and each end terminal (104, 604, 804);
means for sending a second message (214-216, 718-720, 918-920) containing the one or more encryption keys from the network device (114, 614, 814) to the source terminal (102, 602, 802) via a satellite (112, 612, 812) : and
means for sending a third message (218-224) containing the one or more encryption keys to each end terminal (104, 604, 809) via the satellite (112, 612, 812).

## Patentansprüche

1. Verfahren zum Bereitstellen von einem oder mehreren Verschlüsselungsschlüsseln für ein Ursprungs-Endgerät (102, 602, 802) und ein oder mehrere Ziel-Endgeräte (104, 604, 804) für eine künftige mögliche Kommunikation zwischen dem Ursprungs-Endgerät (102, 602, 802) und dem einen oder mehreren Ziel-Endgeräten (104, 604, 804), nachdem eine erste Nachricht (202 - 204, 702 - 704, 902 - 904) an einer Netzwerk-Vorrichtung (114, 614, 814) empfangen wurde, wobei das Verfahren die folgenden Schritte umfasst:
Bestimmen von einer oder mehreren Verschlüsselungs-Fähigkeiten im Hinblick auf algorithmische Unterstützung und von einer oder mehreren domänenspezifischen Verschlüsselungs-Einschränkungen für das Ursprungs-Endgerät (102, 602, 802) und jedes Ziel-Endgerät (104, 604, 804);
Generieren des einen oder mehrerer Verschlüsselungsschlüssel basierend auf der einen oder mehreren Verschlüsselungs-Fähigkeiten und der einen oder mehreren Einschränkungen für das Ursprungs-Endgerät (102, 602, 802) und jedes Ziel-Endgerät (104, 604, 804);
Senden einer zweiten Nachricht (214 - 216, 718 - 720, 918 - 920), die den einen oder mehrere Verschlüsselungsschlüssel enthält, von der Netzwerk-Vorrichtung (114, 614, 814) an das Ursprungs-Endgerät (102, 602, 802) über einen Satelliten (112, 612, 812); und
Senden einer dritten Nachricht (218 - 224), die den einen oder mehrere Verschlüsselungsschlüssel enthält, von dem Ursprungs-Endgerät (102, 602, 802) oder von der Netzwerk-Vorrichtung (114, 614, 814) an jedes Ziel-Endgerät (104, 604, 804) über den Satelliten (112, 612, 812).

2. Verfahren nach Anspruch 1, wobei die Netzwerk-Vorrichtung (114, 614, 814) eine Netzwerk-Steuerzentrale ist.

3. Verfahren nach Anspruch 1, wobei der eine oder mehrere Verschlüsselungsschlüssel durch einen Verschlüsselungsschlüssel-Manager (118, 618, 818) generiert werden, der an die Netzwerk-Vorrichtung (114, 614, 814) gekoppelt ist.

4. Verfahren nach Anspruch 1, wobei der Satellit (112, 612, 812) einen on-board Schalter besitzt, der die Verschlüsselung unterstützt.

5. Verfahren nach Anspruch 1, wobei die erste Nachricht (202 - 204, 702 - 704, 902 - 904) eine ARP-Abfragenachricht enthält.

6. Verfahren nach Anspruch 1, wobei die erste Nachricht (202 - 204, 702 - 704, 902 - 904) eine Heartbeat-Nachricht enthält.

7. Verfahren nach Anspruch 1, wobei die zweite Nachricht (214 - 216, 718 - 720, 918 - 920) eine ARP-Antwortnachricht enthält.

8. Verfahren nach Anspruch 1, wobei die zweite Nachricht (214 - 216, 718 - 720, 918 - 920) eine Heartbeat-Nachricht enthält.

9. Verfahren nach Anspruch 1, wobei die dritte Nachricht (218 - 224) eine UNI-Einrichtungsnachricht enthält.

10. Verfahren nach Anspruch 1, wobei die dritte Nachricht (218 - 224) eine Heartbeat-Nachricht enthält.

11. Verfahren nach Anspruch 1, wobei der eine oder mehrere Verschlüsselungsschlüssel eine Gruppe von Verschlüsselungsschlüsseln enthalten.

12. Verfahren nach Anspruch 11, des Weiteren umfassend den Schritt des periodischen Auswählens eines neuen Verschlüsselungsschlüssels, der von der Gruppe von Verschlüsselungsschlüsseln zu verwenden ist.

13. Verfahren nach Anspruch 12, wobei der neue Verschlüsselungsschlüssel zwischen dem Ursprungs-Endgerät (102, 602, 802) und dem einen oder mehreren Ziel-Endgeräten (104, 604, 804) verhandelt wird.

14. Verfahren nach Anspruch 1, des Weiteren umfassend den Schritt des Erstellens eines verschlüsselten Trägerpfads (128 - 130, 630 - 636, 830 - 832) zwischen dem Ursprungs-Endgerät (102, 602, 802) und jedem Ziel-Endgerät (104, 604, 804) unter Verwendung des einen oder mehrerer Verschlüsselungsschlüssel.

15. Verfahren nach Anspruch 14, wobei der verschlüsselte Trägerpfad (128 - 130, 630 - 636, 830 - 832) eine Punkt-zu-Punkt-Verbindung umfasst.

16. Verfahren nach Anspruch 14, wobei der verschlüsselte Trägerpfad (128 - 130, 630 - 636, 830 - 832) eine Punkt-zu-Mehrpunkt-Verbindung umfasst.

17. Verfahren nach Anspruch 1, des Weiteren umfassend den Schritt des Anweisens des Ursprungs-Endgeräts (102, 602, 802), die Verschlüsselungslogik basierend auf einer oder mehreren Verschlüsselungs-Fähigkeiten oder Einschränkungen des einen oder mehrerer Ziel-Endgeräte (104, 604, 804) zu wechseln.

18. Verfahren nach Anspruch 1, des Weiteren umfassend den Schritt des Bestimmens eines neuen Bereichs von Verschlüsselungs-Fähigkeiten und Einschränkungen des Ursprungs-Endgeräts (102, 602, 802) oder des einen oder mehrerer Ziel-Endgeräte (104, 604, 804), wann immer sich das Ursprungs-Endgerät (102, 602, 802) oder das eine oder mehrere Ziel-Endgeräte (104, 604, 804) bewegen.

19. Verfahren nach Anspruch 1, des Weiteren umfassend den Schritt des Transformierens des einen oder mehrerer Verschlüsselungsschlüssel in eine neue Einheit unter Verwendung eines speziellen Algorithmus, der auf einem vorherigen zugewiesenen oder hart-codierten Algorithmus basiert.

20. Verfahren nach Anspruch 1, des Weiteren umfassend den Schritt des Auswählens eines Algorithmus, der auf einer vereinbarten SLA oder relevanten Funkbedingungen an dem Ursprungs-Endgerät (102, 602, 802) oder dem einen oder mehreren Ziel-Endgeräten (104, 604, 804) basiert.

21. Verfahren nach Anspruch 1, des Weiteren umfassend den Schritt des Wechselns des einen oder mehrerer Verschlüsselungsschlüssel.

22. Verfahren nach Anspruch 21, wobei der eine oder mehrere Verschlüsselungsschlüssel gewechselt werden, wenn eine Standort-Aktualisierung durchgeführt wird.

23. Verfahren nach Anspruch 21, wobei der eine oder mehrere Verschlüsselungsschlüssel gewechselt werden, wenn eines der Ziel-Endgeräte (104, 604, 804) eine logische Grenze überquert.

24. Verfahren nach Anspruch 21, wobei der eine oder mehrere Verschlüsselungsschlüssel basierend auf einem Algorithmus gewechselt werden.

25. Verfahren nach Anspruch 21, wobei der eine oder mehrere Verschlüsselungsschlüssel gewechselt werden, nachdem eine Zeitdauer abgelaufen ist.

26. Verfahren nach Anspruch 25, wobei die Zeitdauer zufällig bestimmt wird.

27. Verfahren nach Anspruch 25, wobei die Zeitdauer durch eine Dienstgüte bestimmt wird.

28. Verfahren nach Anspruch 25, wobei die Zeitdauer durch einen Verbindungstyp bestimmt wird.

29. Verfahren nach Anspruch 25, wobei die Zeitdauer durch eine SLA bestimmt wird.

30. Verfahren nach Anspruch 25, wobei die Zeitdauer durch ein Betrugspotenzial in einem geografischen Gebiet bestimmt wird.

31. Verfahren nach Anspruch 21, wobei der Schritt des Wechselns des einen oder mehrerer Verschlüsselungsschlüssel durch das Ursprungs-Endgerät (102, 602, 802) initiiert wird.

32. Verfahren nach Anspruch 21, wobei der Schritt des Wechselns des einen oder mehrerer Verschlüsselungsschlüssel durch eines der Ziel-Endgeräte (104, 604, 804) initiiert wird.

33. Verfahren nach Anspruch 21, wobei der Schritt des Wechselns des einen oder mehrerer Verschlüsselungsschlüssel durch die Netzwerk-Vorrichtung (114, 614, 814) initiiert wird.

34. Verfahren nach Anspruch 21, wobei der Schritt des Wechselns des Verschlüsselungsschlüssels umfasst:
Senden einer Nachricht zum Anfordern eines neuen Schlüssels (308 - 310, 408 - 410, 508 - 510) von dem Ursprungs-Endgerät (102, 602, 802) an die Netzwerk-Vorrichtung (114, 614, 814) über den Satelliten (112, 612, 812);
Generieren von einem oder mehreren neuen Verschlüsselungsschlüsseln basierend auf der einen oder mehreren Verschlüsselungs-Fähigkeiten und Einschränkungen für das Ursprungs-Endgerät (102, 602, 802) und jedes Ziel-Endgerät (104, 604, 804);
Senden einer neuen Schlüssel-Antwortnachricht (316 - 318, 416 - 418, 518 - 520), die den einen oder mehrere neue Verschlüsselungsschlüssel enthält, an das Ursprungs-Endgerät (102, 602, 802) über den Satelliten (112, 612, 812); und
Senden einer Nachricht zum Zurücksetzen eines Schlüssels (320, 324; 420, 424; 522-524), die den einen oder mehrere Verschlüsselungsschlüssel enthält, an jedes Ziel-Endgerät (104, 604, 804) über den Satelliten (112, 612, 812).

35. Verfahren nach Anspruch 34, wobei das Ursprungs-Endgerät (102, 602, 802) und das eine oder mehrere Ziel-Endgeräte (104, 604, 804) alle neu empfangenen Nachrichten speichern, bis der eine oder mehrere neue Verschlüsselungsschlüssel durch das Ursprungs-Endgerät (102, 602, 802) und das eine oder mehrere Ziel-Endgeräte (104, 604, 804) angenommen worden sind.

36. Verfahren nach Anspruch 34, wobei der eine oder mehrere neue Verschlüsselungsschlüssel von dem Ursprungs-Endgerät (102, 602, 802) und dem einen oder mehreren Ziel-Endgeräten (104, 604, 804) während einer Pause in der Kommunikation angenommen werden.

37. Verfahren nach Anspruch 21, wobei der Schritt des Wechseln des Verschlüsselungsschlüssels umfasst:
Senden einer Nachricht zum Anfordern eines neuen Schlüssels (308 - 310, 408 - 410, 508 -510) von dem Ursprungs-Endgerät (102, 602, 802) an die Netzwerk-Vorrichtung (114, 614, 814) über den Satelliten (112, 612, 812); und
Generieren von einem oder mehreren neuen Verschlüsselungsschlüsseln basierend auf der einen oder mehreren Verschlüsselungs-Fähigkeiten und Einschränkungen für das Ursprungs-Endgerät (102, 602, 802) und jedes Ziel-Endgerät (104, 604, 804); Senden des einen oder mehrerer neuer Verschlüsselungsschlüssel an das Ursprungs-Endgerät (102, 602, 802) und das eine oder mehrere Ziel-Endgeräte (104, 604, 804) über den Satelliten (112, 612, 812).

38. Verfahren nach Anspruch 21, des Weiteren umfassend den Schritt des Verwendens der gewechselten Verschlüsselungsschlüssel in einem neuen Nachrichtenaustausch (334 - 336, 434 - 436, 538 - 540) zwischen dem Ursprungs-Endgerät (102, 602, 802) und dem einen oder mehreren Ziel-Endgeräten (104, 604, 804).

39. Verfahren nach Anspruch 21, des Weiteren umfassend die folgenden Schritte:
Erstellen einer neuen Trägerverbindung zwischen dem Ursprungs-Endgerät (102, 602, 802) und dem einen oder mehreren Ziel-Endgeräten (104, 604, 804) unter Verwendung der gewechselten Verschlüsselungsschlüssel; und
Abbauen einer alten Trägerverbindung, wobei die alte Trägerverbindung zwischen dem Ursprungs-Endgerät (102, 602, 802) und dem einen oder mehreren Ziel-Endgeräten (104, 604, 804) unter Verwendung des einen oder mehrerer Verschlüsselungsschlüssel hergestellt war.

40. Verfahren nach Anspruch 1, wobei das Ursprungs-Endgerät (102, 602, 802), das eine oder mehrere Ziel-Endgeräte (104, 604, 804) und die Netzwerk-Vorrichtung (114, 614, 814) in einem Netzwerk mit asynchronem Transfermodus arbeiten.

41. Verfahren nach Anspruch 1, des Weiteren umfassend den Schritt des Sendens einer Wissensbasis von einer Gruppe von Verschlüsselungsschlüsseln, die durch das eine oder mehrere Ziel-Endgeräte (104, 604, 804) unterstützt werden können, von der Netzwerk-Vorrichtung (114, 614, 814) an das Ursprungs-Endgerät (102, 602, 802).

42. Verfahren nach Anspruch 41, des Weiteren umfassend den Schritte des periodischen Aktualisierens der Wissensbasis.

43. Verfahren nach Anspruch 1, des Weiteren umfassend den Schritt des Auswählens eines Vorgabe-Verschlüsselungsmechanismus, wann immer die eine oder mehrere Verschlüsselungs-Fähigkeiten und Einschränkungen nicht gefunden werden.

44. Computerprogramm, verkörpert in einem computerlesbaren Medium, zum Bereitstellen von einem oder mehreren Verschlüsselungsschlüsseln für ein Ursprungs-Endgerät (102, 602, 802) und ein oder mehrere Ziel-Endgeräte (104, 604, 804) für eine künftige mögliche Kommunikation zwischen dem Ursprungs-Endgerät (102, 602, 802) und dem einen oder mehreren Ziel-Endgeräten (104, 604, 804), nachdem eine erste Nachricht (202 - 204, 702 - 704, 902 - 904) an der Netzwerk-Vorrichtung (144, 614, 814) empfangen worden ist, wobei das Computerprogramm umfasst:
ein Code-Segment, das zum Bestimmen von einer oder mehreren Verschlüsselungs-Fähigkeiten im Hinblick auf algorithmische Unterstützung und von einer oder mehreren domänenspezifischen Verschlüsselungs-Einschränkungen für das Ursprungs-Endgerät (102, 602, 802) und jedes Ziel-Endgerät (104, 604, 804) ausgelegt ist;
ein Code-Segment, das zum Generieren des einen oder mehrerer Verschlüsselungsschlüssel basierend auf der einen oder mehreren Verschlüsselungs-Fähigkeiten und auf der einen oder mehreren Einschränkungen für das Ursprungs-Endgerät (102, 602, 802) und jedes Ziel-Endgerät (104, 604, 804) ausgelegt ist;
ein Code-Segment, das zum Senden einer zweiten Nachricht (214 - 216, 718 - 720, 918 - 920), die den einen oder mehrere Verschlüsselungsschlüssel enthält, von der Netzwerk-Vorrichtung (114, 614, 814) an das Ursprungs-Endgerät (102, 602, 802) über einen Satelliten (112, 612, 812) ausgelegt ist; und
ein Code-Segment, das zum Senden einer dritten Nachricht (218 - 224), die den einen oder mehrere Verschlüsselungsschlüssel enthält, von dem Ursprungs-Endgerät (102, 602, 802) oder von der Netzwerk-Vorrichtung (114, 614, 814) an jedes Ziel-Endgerät (104, 604, 804) über den Satelliten (112, 612, 812) ausgelegt ist.

45. Computerprogramm nach Anspruch 44, das des Weiteren umfasst:
wobei der eine oder mehrere Verschlüsselungsschlüssel eine Gruppe von Verschlüsselungsschlüsseln umfassen; und
ein Code-Segment, das zum periodischen Auswählen eines neuen Verschlüsselungsschlüssels ausgelegt ist, der von der Gruppe von Verschlüsselungsschlüsseln verwendet werden soll.

46. Computerprogramm nach Anspruch 44, des Weiteren umfassend ein Code-Segment, das zum Erstellen eines verschlüsselten Trägerpfads (128 - 130, 630 - 636, 830 - 832) zwischen dem Ursprungs-Endgerät (102, 602, 802) und jedem Ziel-Endgerät (104, 604, 804) unter Verwendung des einen oder mehrerer Verschlüsselungsschlüssel ausgelegt ist.

47. Computerprogramm nach Anspruch 44, des Weiteren umfassend ein Code-Segment, das zum Anweisen des Ursprungs-Endgeräts (102, 602, 802), die Verschlüsselungslogik basierend auf einer oder mehreren Verschlüsselungs-Fähigkeiten oder Einschränkungen des einen oder mehrerer Ziel-Endgeräte (104, 604, 804) zu wechseln, ausgelegt ist.

48. Computerprogramm nach Anspruch 44, des Weiteren umfassend ein Code-Segment, das zum Bestimmen eines neuen Bereichs von Verschlüsselungs-Fähigkeiten und Einschränkungen des Ursprungs-Endgeräts (102, 602, 802) oder des einen oder mehrerer Ziel-Endgeräte (104, 604, 804), wann immer sich das Ursprungs-Endgerät (102, 602, 802) oder das eine oder mehrere Ziel-Endgeräte (104, 604, 804) bewegen, ausgelegt ist.

49. Computerprogramm nach Anspruch 44, des Weiteren umfassend ein Code-Segment, das zum Transformieren des einen oder mehrerer Verschlüsselungsschlüssel in eine neue Einheit unter Verwendung eines speziellen Algorithmus, der auf einem vorherigen zugewiesenen oder hart-codierten Algorithmus basiert, ausgelegt ist.

50. Computerprogramm nach Anspruch 44, des Weiteren umfassend ein Code-Segment, das zum Auswählen eines Algorithmus, der auf einer vereinbarten SLA oder relevanten Funkbedingungen an dem Ursprungs-Endgerät (102, 602, 802) oder dem einen oder mehreren Ziel-Endgeräten (104, 604, 804) basiert, ausgelegt ist.

51. Computerprogramm nach Anspruch 44, des Weiteren umfassend ein Code-Segment, das zum Wechseln des einen oder mehrerer Verschlüsselungsschlüssel ausgelegt ist.

52. Computerprogramm nach Anspruch 51, wobei das Code-Segment, das zum Wechseln des einen oder mehrerer Verschlüsselungsschlüssel ausgelegt ist, umfasst:
ein Code-Segment, das zum Senden einer Nachricht zum Anfordern eines neuen Schlüssels (308 - 310, 408 - 410, 508 - 510) von dem Ursprungs-Endgerät (102, 602, 802) an die Netzwerk-Vorrichtung (114, 614, 814) über den Satelliten (112, 612, 812) ausgelegt ist;
ein Code-Segment, das zum Generieren von einem oder mehreren neuen Verschlüsselungsschlüsseln basierend auf der einen oder mehreren Verschlüsselungs-Fähigkeiten und Einschränkungen für das Ursprungs-Endgerät (102, 602, 802) und jedes Ziel-Endgerät (104, 604, 804) ausgelegt ist;
ein Code-Segment, das zum Senden einer neuen Schlüssel-Antwortnachricht (316 - 318, 416 - 418, 518 - 520), die den einen oder mehrere neue Verschlüsselungsschlüssel enthält, an das Ursprungs-Endgerät (102, 602, 802) über den Satelliten (112, 612, 812) ausgelegt ist; und
ein Code-Segment, das zum Senden einer Nachricht zum Zurücksetzen eines Schlüssels (320, 324; 420, 424; 522-524), die den einen oder mehrere Verschlüsselungsschlüssel enthält, an jedes Ziel-Endgerät (104, 604, 804) über den Satelliten (112, 612, 812) ausgelegt ist.

53. Computerprogramm nach Anspruch 51, wobei das Code-Segment, das zum Wechseln des Verschlüsselungsschlüssels ausgelegt ist, umfasst:
ein Code-Segment, das zum Senden einer Nachricht zum Anfordern eines neuen Schlüssels (308 - 310, 408 - 410, 508 - 510) von dem Ursprungs-Endgerät (102, 602, 802) an die Netzwerk-Vorrichtung (114, 614, 814) über den Satelliten (112, 612, 812) ausgelegt ist;
ein Code-Segment, das zum Generieren von einem oder mehreren neuen Verschlüsselungsschlüsseln basierend auf der einen oder mehreren Verschlüsselungs-Fähigkeiten und Einschränkungen für das Ursprungs-Endgerät (102, 602, 802) und jedes Ziel-Endgerät (104, 604, 804) ausgelegt ist; und
ein Code-Segment, das zum Senden des einen oder mehrerer neuer Verschlüsselungsschlüssel an das Ursprungs-Endgerät (102, 602, 802) und das eine oder mehrere Ziel-Endgeräte (104, 604, 804) über den Satelliten (112, 612, 812) ausgelegt ist.

54. Computerprogramm nach Anspruch 51, des Weiteren umfassend ein Code-Segment, das zum Verwenden der gewechselten Verschlüsselungsschlüssel in einem neuen Nachrichtenaustausch (334 - 336, 434 - 436, 538 - 540) zwischen dem Ursprungs-Endgerät (102, 602, 802) und dem einen oder mehreren Ziel-Endgeräten (104, 604, 804) ausgelegt ist.

55. Computerprogramm nach Anspruch 51, das des Weiteren umfasst:
ein Code-Segment, das zum Erstellen einer neuen Trägerverbindung zwischen dem Ursprungs-Endgerät (102, 602, 802) und dem einen oder mehreren Ziel-Endgeräten (104, 604, 804) unter Verwendung der gewechselten Verschlüsselungsschlüssel ausgelegt ist; und
ein Code-Segment, das zum Abbauen einer alten Trägerverbindung, wobei die alte Trägerverbindung zwischen dem Ursprungs-Endgerät (102, 602, 802) und dem einen oder mehreren Ziel-Endgeräten (104, 604, 804) unter Verwendung des einen oder mehrerer Verschlüsselungsschlüssel hergestellt war, ausgelegt ist.

56. Computerprogramm nach Anspruch 44, des Weiteren umfassend ein Code-Segment, das zum Senden einer Wissensbasis einer Gruppe von Verschlüsselungsschlüsseln, die durch das eine oder mehrere Ziel-Endgeräte (104, 604, 804) unterstützt werden können, von der Netzwerk-Vorrichtung (114, 614, 814) an das Ursprungs-Endgerät (102, 602, 802) ausgelegt ist.

57. Computerprogramm nach Anspruch 56, des Weiteren umfassend ein Code-Segment, das zum periodischen Aktualisieren der Wissensbasis ausgelegt ist.

58. Computerprogramm nach Anspruch 44, des Weiteren umfassend ein Code-Segment, das zum Auswählen eines Standard-Verschlüsselungsmechanismus, wann immer die eine oder mehrere Verschlüsselungs-Fähigkeiten und Einschränkungen nicht gefunden werden, ausgelegt ist.

59. Netzwerk-Vorrichtung (114, 614, 814) zum Bereitstellen von einem oder mehreren Verschlüsselungsschlüsseln für ein Ursprungs-Endgerät (102, 602, 802) und ein oder mehrere Ziel-Endgeräte (104, 604, 804) für eine künftige mögliche Kommunikation zwischen dem Ursprungs-Endgerät (102, 602, 802) und dem einen oder mehreren Ziel-Endgeräten (104, 604, 804), das Mittel zum Empfangen einer ersten Nachricht (202 - 204, 702 - 704, 902 -904) umfasst,
**gekennzeichnet durch**
Mittel zum Bestimmen von einer oder mehreren Verschlüsselungs-Fähigkeiten im Hinblick auf algorithmische Unterstützung und von einer oder mehreren domänenspezifischen Verschlüsselungs-Einschränkungen für das Ursprungs-Endgerät (102, 602, 802) und jedes Ziel-Endgerät (104, 604, 804);
Mittel zum Generieren des einen oder mehrerer Verschlüsselungsschlüssel basierend auf der einen oder mehreren Verschlüsselungs-Fähigkeiten und der einen oder mehreren Einschränkungen für das Ursprungs-Endgerät (102, 602, 802) und jedes Ziel-Endgerät (104, 604, 804);
Mittel zum Senden einer zweiten Nachricht (214 - 216, 718 - 720, 918 - 920), die den einen oder mehrere Verschlüsselungsschlüssel enthält, von der Netzwerk-Vorrichtung (114, 614, 814) an das Ursprungs-Endgerät (102, 602, 802) über einen Satelliten (112, 612, 812); und
Mittel zum Senden einer dritten Nachricht (218 - 224), die den einen oder mehrere Verschlüsselungsschlüssel enthält, an jedes Ziel-Endgerät (104, 604, 804) über den Satelliten (112, 612, 812).

## Revendications

1. Procédé pour fournir une ou plusieurs clés de cryptage à un terminal source (102, 602, 802) et à un ou plusieurs terminaux destinataires (104, 604, 804) pour une communication future éventuelle entre le terminal source (102, 602, 802) et lesdits un ou plusieurs terminaux destinataires (104, 604, 804) après qu'un premier message (202-204, 702-704, 902-904) soit reçu au niveau d'un élément d'un réseau (114, 614, 814), le procédé comprenant les étapes consistant à :
déterminer une ou plusieurs capacités de cryptage en termes de gestion d'algorithme et d'une ou plusieurs restrictions de cryptage spécifiques au domaine, pour le terminal source (102, 602, 802) et chaque terminal destinataire (104, 604, 804);
engendrer lesdites une ou plusieurs clés de cryptage en se basant sur lesdites une ou plusieurs capacités de cryptage et lesdites une ou plusieurs restrictions pour le terminal source (102, 602, 802) et chaque terminal destinataire (104, 604, 804);
envoyer un deuxième message (214-216, 718-720, 918-920) contenant lesdites une ou plusieurs clés de cryptage à partir de l'élément de réseau (114, 614, 814) au terminal source (102, 602, 802) via un satellite (112, 612, 812); et
envoyer un troisième message (218-224) contenant lesdites une ou plusieurs clés de cryptage à partir du terminal source (102, 602, 802) ou à partir de l'élément de réseau (114, 614, 814) à chaque terminal destinataire (104, 604, 804) via le satellite (112, 612, 812).

2. Procédé selon la revendication 1, dans lequel l'élément de réseau (114, 614, 814) est un centre de commande de réseau.

3. Procédé selon la revendication 1, dans lequel lesdites une ou plusieurs clés de cryptage sont engendrées par un gestionnaire de clés de cryptage (118, 618, 818) couplé à l'élément de réseau (114, 614, 814).

4. Procédé selon la revendication 1, dans lequel le satellite (112, 612, 812) possède un commutateur embarqué qui gère le cryptage.

5. Procédé selon la revendication 1, dans lequel le premier message (202-204, 702-704, 902-904) comprend un message d'interrogation ARP.

6. Procédé selon la revendication 1, dans lequel le premier message (202-204, 702-704, 902-904) comprend un message de "battement de coeur".

7. Procédé selon la revendication 1, dans lequel le deuxième message (214-216, 718-720, 918-920) comprend un message de réponse ARP.

8. Procédé selon la revendication 1, dans lequel le deuxième message (214-216, 718-720, 918-920) comprend un message de "battement de coeur".

9. Procédé selon la revendication 1, dans lequel le troisième message (218-224) comprend un message d'établissement UNI.

10. Procédé selon la revendication 1, dans lequel le troisième message (218-224) comprend un message de "battement de coeur".

11. Procédé selon la revendication 1, dans lequel lesdites une ou plusieurs clés de cryptage comprennent un groupe de clés de cryptage.

12. Procédé selon la revendication 11, comprenant en outre l'étape consistant à choisir périodiquement une nouvelle clé de cryptage à employer dans le groupe des clés de cryptage.

13. Procédé selon la revendication 12, dans lequel la nouvelle clé de cryptage est négociée entre le terminal source (102, 602, 802) et lesdits un ou plusieurs terminaux destinataires (104, 604, 804).

14. Procédé selon la revendication 1, comprenant en outre l'étape consistant à établir un chemin porteur crypté (128-130, 630-636, 830-832) entre le terminal source (102, 602, 802) et chaque terminal destinataire (104, 604, 804) en employant lesdites une ou plusieurs clés de cryptage.

15. Procédé selon la revendication 14, dans lequel le chemin porteur crypté (128-130, 630-636, 830-832) comprend un appel point à point.

16. Procédé selon la revendication 14, dans lequel le chemin porteur crypté (128-130, 630-636, 830-832) comprend un appel point à multipoint.

17. Procédé selon la revendication 1, comprenant en outre l'étape consistant à ordonner au terminal source (102, 602, 802) de modifier la logique de cryptage en se basant sur lesdites une ou plusieurs capacités ou restrictions de cryptage desdits un ou plusieurs terminaux destinataires (104, 604, 804).

18. Procédé selon la revendication 1, comprenant en outre l'étape consistant à déterminer une nouvelle gamme de capacités et de restrictions de cryptage du terminal source (102, 602, 802) ou desdits un ou plusieurs terminaux destinataires (104, 604, 804) à chaque fois que le terminal source (102, 602, 802) ou lesdits un ou plusieurs terminaux destinataires (104, 604, 804) se déplacent.

19. Procédé selon la revendication 1, comprenant en outre l'étape consistant à transformer lesdites une ou plusieurs clés de cryptage en une nouvelle entité, en employant un algorithme spécialisé, en se basant sur un algorithme attribué au préalable ou figé dans le code.

20. Procédé selon la revendication 1, comprenant en outre l'étape consistant à choisir un algorithme en se basant sur un accord SLA ou des conditions radio pertinentes au niveau du terminal source (102, 602, 802) ou desdits un ou plusieurs terminaux destinataires (104, 604, 804) .

21. Procédé selon la revendication 1, comprenant en outre l'étape de modification desdites une ou plusieurs clés de cryptage.

22. Procédé selon la revendication 21, dans lequel lesdites une ou plusieurs clés de cryptage sont modifiées lorsqu'une mise à jour de position est réalisée.

23. Procédé selon la revendication 21, dans lequel lesdites une ou plusieurs clés de cryptage sont modifiées lorsque l'un des terminaux destinataires (104, 604, 804) traverse une barrière logique.

24. Procédé selon la revendication 21, dans lequel lesdites une ou plusieurs clés de cryptage sont modifiées en se basant sur un algorithme.

25. Procédé selon la revendication 21, dans lequel lesdites une ou plusieurs clés de cryptage sont modifiées après écoulement d'un laps de temps.

26. Procédé selon la revendication 25, dans lequel le laps de temps est déterminé de manière aléatoire.

27. Procédé selon la revendication 25, dans lequel le laps de temps est déterminé par une qualité de service.

28. Procédé selon la revendication 25, dans lequel le laps de temps est déterminé par un type d'appel.

29. Procédé selon la revendication 25, dans lequel le laps de temps est déterminé par un SLA.

30. Procédé selon la revendication 25, dans lequel le laps de temps est déterminé par une possibilité de fraude dans une région géographique.

31. Procédé selon la revendication 21, dans lequel l'étape de modification desdites une ou plusieurs clés de cryptage est amorcée par le terminal source (102, 602, 802).

32. Procédé selon la revendication 21, dans lequel l'étape de modification desdites une ou plusieurs clés de cryptage est amorcée par l'un des terminaux destinataires (104, 604, 804).

33. Procédé selon la revendication 21, dans lequel l'étape de modification desdites une ou plusieurs clés de cryptage est amorcée par l'élément de réseau (114, 614, 814).

34. Procédé selon la revendication 21, dans lequel l'étape de modification de la clé de cryptage comprend les étapes consistant à :
envoyer un message de demande de nouvelle clé (308-310, 408-410, 508-510) à partir du terminal source (102, 602, 802) à l'élément de réseau (114, 614, 814) via le satellite (112, 612, 812);
engendrer une ou plusieurs nouvelles clés de cryptage en se basant sur lesdites une ou plusieurs capacités et restrictions de cryptage pour le terminal source (102, 602, 802) et chaque terminal destinataire (104, 604, 804);
envoyer un message de réponse de nouvelle clé (316-318, 416-418, 518-520) contenant lesdites une ou plusieurs nouvelles clés de cryptage au terminal source (102, 602, 802) via le satellite (112, 612, 812); et
envoyer un message de réinitialisation de clé (320, 324, 420, 424; 522-524) contenant lesdites une ou plusieurs nouvelles clés de cryptage à chaque terminal destinataire (104, 604, 804) via le satellite (112, 612, 812).

35. Procédé selon la revendication 34, dans lequel le terminal source (102, 602, 802) et lesdits un ou plusieurs terminaux destinataires (104, 604, 804) sauvegardent tous les messages nouvellement reçus jusqu'à ce que lesdites une ou plusieurs nouvelles clés de cryptage soient acceptées par le terminal source (102, 602, 802) et lesdits un ou plusieurs terminaux destinataires (104, 604, 804).

36. Procédé selon la revendication 34, dans lequel lesdites une ou plusieurs nouvelles clés de cryptage sont acceptées par le terminal source (102, 602, 802) et lesdits un ou plusieurs terminaux destinataires (104, 604, 804) pendant une accalmie dans la communication.

37. Procédé selon la revendication 21, dans lequel l'étape de modification de la clé de cryptage comprend les étapes consistant à :
envoyer un message de demande de nouvelle clé (308-310, 408-410, 508-510) à partir du terminal source (102, 602, 802) à l'élément de réseau (114, 614, 814) via le satellite (112, 612, 812); et
engendrer une ou plusieurs nouvelles clés de cryptage en se basant sur lesdites une ou plusieurs capacités et restrictions de cryptage pour le terminal source (102, 602, 802) et chaque terminal destinataire (104, 604, 804);
envoyer lesdites une ou plusieurs nouvelles clés de cryptage au terminal source (102, 602, 802) et auxdits un ou plusieurs terminaux destinataires (104, 604, 804) via le satellite (112, 612, 812).

38. Procédé selon la revendication 21, comprenant en outre l'étape d'emploi des clés de cryptage modifiées dans un nouveau échange de messages (334-336, 434-436, 538-540) entre le terminal source (102, 602, 802) et lesdits un ou plusieurs terminaux destinataires (104, 604, 804).

39. Procédé selon la revendication 21, comprenant en outre les étapes consistant à :
établir une nouvelle connexion porteuse entre le terminal source (102, 602, 802) et lesdits un ou plusieurs terminaux destinataires (104, 604, 804) en employant les clés de cryptage modifiées; et
démolir une ancienne connexion porteuse, dans laquelle l'ancienne connexion porteuse a été établie entre le terminal source (102, 602, 802) et lesdits un ou plusieurs terminaux destinataires (104, 604, 804) en employant lesdites une ou plusieurs clés de cryptage.

40. Procédé selon la revendication 1 dans lequel le terminal source (102, 602, 802), lesdits un ou plusieurs terminaux destinataires (104, 604, 804) et l'élément de réseau (114, 614, 814) fonctionnent dans un réseau à mode de transfert asynchrone.

41. Procédé selon la revendication 1, comprenant en outre l'étape d'envoi d'une base de connaissances d'un ensemble de clés de cryptage qui peuvent être gérées par lesdits un ou plusieurs terminaux destinataires (104, 604, 804) à partir de l'élément de réseau (114, 614, 814) au terminal source (102, 602, 802).

42. Procédé selon la revendication 41, comprenant en outre l'étape de mise à jour périodique de la base de connaissances.

43. Procédé selon la revendication 1, comprenant en outre l'étape de sélection d'un mécanisme de cryptage par défaut à chaque fois que lesdites une ou plusieurs capacités et restrictions de cryptage ne sont pas trouvées.

44. Programme informatique réalisé sur un support lisible par ordinateur pour fournir une ou plusieurs clés de cryptage à un terminal source (102, 602, 802) et à un ou plusieurs terminaux destinataires (104, 604, 804) en vue d'une éventuelle communication future entre le terminal source (102, 602, 0802) et lesdits un ou plusieurs terminaux destinataires (104, 604, 804) après réception d'un premier message (202-204, 702-704, 902-904) au niveau d'un élément de réseau (114, 614, 814), le programme informatique comprenant :
un segment de code adapté en vue de déterminer lesdites une ou plusieurs capacités de cryptage en termes de gestion d'algorithmes et une ou plusieurs restrictions de cryptage spécifiques au domaine pour le terminal source (102, 602, 802) et chaque terminal destinataire (104, 604, 804);
un segment de code adapté en vue d'engendrer lesdites une ou plusieurs clés de cryptage en se basant sur lesdites une ou plusieurs capacités de cryptage et lesdites une ou plusieurs restrictions pour le terminal source (102, 602, 802) et chaque terminal destinataire (104, 604, 804);
un segment de code adapté en vue d'envoyer un deuxième message (214-216, 718-720, 918-920) contenant lesdites une ou plusieurs clés de cryptage à partir de l'élément de réseau (114, 614, 814) au terminal source (102, 602, 802) via un satellite (112, 612, 812); et
un segment de code adapté en vue d'envoyer un troisième message (218-224) contenant lesdites une ou plusieurs clés de cryptage à partir du terminal source (102, 602, 802) ou à partir de l'élément de réseau (114, 614, 814) à chaque terminal destinataire (104, 604, 804) via le
satellite (112, 612, 812).

45. Programme informatique selon la revendication 44, comprenant en outre :
dans lequel lesdites une ou plusieurs clés de cryptage comprennent un groupe de clés de cryptage; et
un segment de code adapté en vue de choisir périodiquement une nouvelle clé de cryptage à employer, dans le groupe des clés de cryptage.

46. Programme informatique selon la revendication 44, comprenant en outre un segment de code adapté en vue d'établir un chemin porteur crypté (128-130, 630-636, 830-832) entre le terminal source (102, 602, 802) et chaque terminal destinataire (104, 604, 804) en employant lesdites une ou plusieurs clés de cryptage.

47. Programme informatique selon la revendication 44, comprenant en outre un segment de code adapté en vue d'ordonner au terminal source (102, 602, 802) de modifier la logique de cryptage en se basant sur lesdites une ou plusieurs capacités ou restrictions de cryptage desdits un ou plusieurs terminaux destinataires (140, 604, 804).

48. Programme informatique selon la revendication 44, comprenant en outre un segment de code adapté en vue de déterminer une nouvelle gamme de capacités et de restrictions de cryptage du terminal source (102, 602, 802) ou desdits un ou plusieurs terminaux destinataires (104, 604, 804) à chaque fois que le terminal source (102, 602, 802) ou lesdits un ou plusieurs terminaux destinataires (104, 604, 804) se déplacent.

49. Programme informatique selon la revendication 44, comprenant en outre un segment de code adapté en vue de transformer lesdites une ou plusieurs clés de cryptage en une nouvelle entité en employant un algorithme spécialisé basé sur un algorithme attribué au préalable, ou figé dans le code.

50. Programme informatique selon la revendication 44, comprenant en outre un segment de code adapté en vue de choisir un algorithme en se basant sur un accord SLA ou des conditions radio pertinentes au niveau du terminal source (102, 602, 802) ou desdits un ou plusieurs terminaux destinataires (104, 604, 804).

51. Programme informatique selon la revendication 44, comprenant en outre un segment de code adapté en vue de modifier lesdites une ou plusieurs clés de cryptage.

52. Programme informatique selon la revendication 51, dans lequel le segment de code adapté en vue de modifier la clé de cryptage comprend :
un segment de code adapté en vue d'envoyer un message de demande de nouvelle clé (308-310, 408-410, 508-510) à partir du terminal source (102, 602, 802) à l'élément de réseau (114, 614, 814) via le satellite (112, 612, 812);
un segment de code en vue d'engendrer une ou plusieurs nouvelles clés de cryptage en se basant sur lesdites une ou plusieurs capacités et restrictions de cryptage pour le terminal source (102, 602, 802) et chaque terminal destinataire (104, 604, 804);
un segment de code adapté en vue d'envoyer un message de réponse de nouvelle clé (316-318, 416-418, 518-520) contenant lesdites une ou plusieurs nouvelles clés de cryptage au terminal source (102, 602, 802) via le satellite (112, 612, 812); et
un segment de code adapté en vue d'envoyer un message de réinitialisation de clé (320, 324; 420, 424; 522-524) contenant lesdites une ou plusieurs clés de cryptage à chaque terminal destinataire (104, 604, 804) via le satellite (112, 612, 812).

53. Programme informatique selon la revendication 51, dans lequel le segment de code adapté en vue de modifier la clé de cryptage comprend :
un segment de code adapté en vue d'envoyer un message de demande de nouvelle clé (308-310, 408-410, 508-510) à partir du terminal source (102, 602, 802) à l'élément de réseau (114, 614, 814) via le satellite (112, 612, 812);
un segment de code adapté en vue d'engendrer une ou plusieurs nouvelles clés de cryptage en se basant sur lesdites une ou plusieurs capacités et restrictions de cryptage pour le terminal source (102, 602, 802) et chaque terminal destinataire (104, 604, 804); et
un segment de code adapté en vue d'envoyer lesdites une ou plusieurs nouvelles clés de cryptage au terminal source (102, 602, 802) et lesdits un ou plusieurs terminaux destinataires (104, 604, 804) via le satellite (112, 612, 812).

54. Programme informatique selon la revendication 51, comprenant en outre un segment de code adapté en vue d'employer les clés de cryptage modifiées dans un nouvel échange de messages (334-336, 434-436, 538-540) entre le terminal source (102, 602, 802) et lesdits un ou plusieurs terminaux destinataires (104, 604, 804).

55. Programme informatique selon la revendication 51, comprenant en outre :
un segment de code adapté en vue d'établir une nouvelle connexion porteuse entre le terminal source (102, 602, 802) et lesdits un ou plusieurs terminaux destinataires (104, 604, 804) en employant les clés de cryptage modifiées; et
un segment de code adapté à la démolition d'une ancienne connexion porteuse, dans lequel l'ancienne connexion porteuse a été établie entre le terminal source (102, 602, 802) et lesdits un ou plusieurs terminaux destinataires (104, 604, 804) en employant lesdites une ou plusieurs clés de cryptage.

56. Programme informatique selon la revendication 44, comprenant en outre un segment de code adapté en vue d'envoyer une base de connaissances d'un ensemble de clés de cryptage, qui peut être gérée par lesdits un ou plusieurs terminaux destinataires (104, 604, 804) à partir de l'élément de réseau (114, 614, 804) au terminal source (102, 602, 802).

57. Programme informatique selon la revendication 56, comprenant en outre un segment de code adapté à la mise à jour périodique de la base de connaissances.

58. Programme informatique selon la revendication 44, comprenant en outre un segment de code adapté en vue de choisir un mécanisme de cryptage par défaut à chaque fois que lesdites une ou plusieurs capacités et restrictions de cryptage ne sont pas trouvées.

59. Elément de réseau (114, 614, 814), pour fournir une ou plusieurs clés de cryptage à un terminal source (102, 602, 802) et à un ou plusieurs terminaux destinataires (104, 604, 804) pour une éventuelle communication future entre le terminal source (102, 602, 802) et lesdits un ou plusieurs terminaux destinataires (104, 604, 804), comprenant des moyens pour recevoir un premier message (202-204, 702-704, 902-904), **caractérisé par** des moyens pour déterminer lesdites une ou plusieurs capacités de cryptage en termes de gestion d'algorithmes et une ou plusieurs restrictions de cryptage spécifiques au domaine pour le terminal source (102, 602, 802) et chaque terminal destinataire (104, 604, 804);
des moyens pour engendrer une ou plusieurs clés de cryptage en se basant sur lesdites une ou plusieurs capacités de cryptage et lesdites une ou plusieurs restrictions de cryptage pour le terminal source ((102, 602, 802) et chaque terminal destinataire (104, 604, 804);
des moyens pour envoyer un deuxième message (214-216, 718-720, 918-920) contenant lesdites une ou plusieurs clés de cryptage à partir de l'élément de réseau (114, 614, 814) au terminal source (102, 602, 802) via un satellite (112, 612, 812); et
des moyens pour envoyer un troisième message (218-224) contenant lesdites une ou plusieurs clés de cryptage à chaque terminal destinataire (104, 604, 804) via le satellite (112, 612, 812).
